(19) Europäisches Patentamt
European Patent Office
Office européen des brevets

(11) EP 3 862 400 B1

(12) **EUROPEAN PATENT SPECIFICATION**

(45) Date of publication and mention of the grant of the patent:
**13.09.2023 Bulletin 2023/37**

(21) Application number: **19869797.1**

(22) Date of filing: **04.10.2019**

(51) International Patent Classification (IPC):
***C09D 183/04*** (2006.01) ***B05D 5/00*** (2006.01)
***B05D 7/24*** (2006.01) ***B32B 27/00*** (2006.01)
***B32B 27/18*** (2006.01) ***C09D 5/16*** (2006.01)
***C09D 7/20*** (2018.01) ***C09D 7/63*** (2018.01)
***C09D 7/65*** (2018.01)

(52) Cooperative Patent Classification (CPC):
(C-Sets available)
**C09D 5/1675; C09D 7/20; C09D 7/63;**
**C09D 183/04;** B05D 5/08; C08G 77/16;
C08G 77/18; C08K 5/098 (Cont.)

(86) International application number:
**PCT/JP2019/039296**

(87) International publication number:
**WO 2020/071537 (09.04.2020 Gazette 2020/15)**

# (54) ANTIFOULING COATING COMPOSITION, ANTIFOULING COATING FILM, SUBSTRATE WITH ANTIFOULING COATING FILM AND METHOD FOR PRODUCING SAME

BEWUCHSHEMMENDE BESCHICHTUNGSZUSAMMENTZUNG, BEWUCHSHEMMENDER BESCHICHTUNGSFILM, SUBSTRAT MIT BEWUCHSHEMMENDEM BESCHICHTUNGSFILM UND VERFAHREN ZUR HERSTELLUNG DAVON

COMPOSITION DE REVÊTEMENT ANTISALISSURE, FILM DE REVÊTEMENT ANTISALISSURE, SUBSTRAT AVEC FILM DE REVÊTEMENT ANTISALISSURE ET LEUR PROCÉDÉ DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.10.2018 JP 2018189994**

(43) Date of publication of application:
**11.08.2021 Bulletin 2021/32**

(73) Proprietor: **Chugoku Marine Paints, Ltd.**
**Hiroshima 739-0652 (JP)**

(72) Inventors:
- **OSAWA, Keisuke**
**Otake-shi, Hiroshima 739-0652 (JP)**
- **AOI, Atsushi**
**Otake-shi, Hiroshima 739-0652 (JP)**
- **TANINO, Soichiro**
**Otake-shi, Hiroshima 739-0652 (JP)**
- **IKADAI, Junnai**
**Otake-shi, Hiroshima 739-0652 (JP)**

(74) Representative: **Hoffmann Eitle**
**Patent- und Rechtsanwälte PartmbB**
**Arabellastraße 30**
**81925 München (DE)**

(56) References cited:
**WO-A1-2014/077205** **WO-A1-2017/209029**
**WO-A1-2018/123928** **CN-A- 106 752 188**
**JP-A- S6 211 768** **JP-A- 2003 246 861**
**JP-A- 2007 238 820** **JP-A- 2009 096 899**
**JP-A- 2011 032 473** **JP-A- 2011 032 474**
**JP-A- 2012 087 303**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 862 400 B1

(52) Cooperative Patent Classification (CPC): (Cont.)

C-Sets
**C09D 183/04, C08L 83/00, C08L 83/00, C08K 3/36**

## Description

### TECHNICAL FIELD

The present invention relates to an antifouling coating composition, an antifouling coating film, and a substrate with an antifouling coating film and a method for producing the same.

### BACKGROUND ART

An organopolysiloxane-based antifouling coating film using a curable organopolysiloxane is widely used for the purpose of preventing attachment of aquatic organisms to ships, underwater structures, fishery materials, and the like from occurring. The organopolysiloxane-based antifouling coating film has such characteristics that it is low in surface free energy and has a low elastic modulus, and therefore, it has such advantages that it is able to prevent attachment and fixation of macroorganisms, such as barnacles and mussels, from occurring.

For example, PTL 1 discloses an antifouling coating composition containing (A) a diorganopolysiloxane having at least two silanol groups in one molecule, (B) an organosilane having at least two hydrolyzable groups in one molecule and/or a partially hydrolyzed condensate thereof, and (C) a pyrithione metal salt.

### CITATION LIST

PTL 4 describes an organopolysiloxane antifouling coating composition which includes a curable organopolysiloxane, a pyrithione salt, and titanium oxide, the titanium oxide being surface-treated with a compound including at least one selected from the group consisting of silicon compounds, zirconium compounds and zinc compounds.

PTL 5 describes an antifouling coating composition which contains a curable organopolysiloxane and a polymer containing a constituent unit derived from at least one selected from the group consisting of an unsaturated monomer represented by the following formula, a tetrahydrofurfuryl (meth)acrylate, a 4-(meth)acryloylmorpholine, and a vinylpyrrolidone, wherein in the formula, $R^1$ represents a hydrogen atom or a monovalent hydrocarbon group having 1 to 10 carbon atoms; $R^2$ represents an ethylene group or a propylene group; $R^3$ represents a divalent hydrocarbon group having 4 to 10 carbon atoms; $R^4$ represents a hydrogen atom or a monovalent hydrocarbon group having 1 to 30 carbon atoms; m represents an integer of 1 to 50; n represents an integer of 0 to 50; and X represents an ester bond, an amide bond, or a single bond:

$$H_2C{=}CR^1{-}X{-}\left[(R^2O)_m(R^3O)_n\right]{-}R^4$$

PTL 6 describes an organopolysiloxane hydrophilic composition which comprises an organopolysiloxane containing two or more of silanol groups (Si-OH) in one molecule; and at least one compound selected from the group consisting of a silicon-containing compound having a hydrophilic group Q bonded to an Si atom and a functional group X bonded to an Si atom and capable of condensing reaction with the silanol group (Si-OH), its partial hydrolysate, and a condensate of these.

PTL 7 describes a high-performance fluorocarbon paint for lintel renovation which is prepared from 44 to 52 parts by weight of a fluorocarbon resin, 22 to 26 parts by weight of a methacrylate, 19 to 25 parts by weight of a thermoplastic acrylic resin, 14 to 16 parts by weight of a butyl glycol ether, 9 to 12 parts by weight of a coalescing agent, 7 to 11 parts by weight of a nano-sized hydrophobic agent, 5 to 8 parts by weight of dispersant, 6 to 9 parts by weight of defoamer, 4 to 9 parts by weight of a siloxane crosslinker and 3 to 5 parts by weight of a surfactant.

### PATENT LITERATURE

PTL 1: WO 2014/077205 A
PTL 2: JP 2011-32473 A
PTL 3: JP 2011-32474 A
PTL 4 WO 2018/123928 A1
PTL 5 WO 2017/209029 A1
PTL 6 JP 2007 238820 A

PTL 7 CN 106 752 188 A

## SUMMARY OF INVENTION

### TECHNICAL PROBLEM

The curable organopolysiloxane-based antifouling coating composition disclosed in PTL 1 further contains a curing catalyst (G) as an optional ingredient. Examples of such a catalyst include organometallic catalysts, such as tin-based catalysts and bismuth-based catalysts. However, there is involved such an issue that the tin-based catalyst may be harmful, and its usage amount is regulated by environmental regulations. For that reason, it has been considered as an challenge over a long period of time to use a highly safe and versatile catalyst as an alternative catalyst to the tin-based catalyst. In addition, it has been desired to reduce the usage amount of the bismuth-based catalyst from the viewpoint of resource scarcity.

PTLs 2 and 3 disclose organic carboxylic acid metal salts of lithium, sodium, potassium, zinc, strontium, or the like as a catalyst that is contained in a one-component system silicon composition which is curable at room temperature (RTV) and is suitable for applications, such as adhesives and sealing materials. However, in the case where the silicone composition which is suitable for the aforementioned applications is applied to an antifouling coating application for the purpose of preventing attachment of aquatic organisms from occurring, failure may be caused in performances, such as curability, and thus, there is room for improvement.

In order to solve the aforementioned problem, the present invention has been made and is to provide an antifouling coating composition which does not use a tin-based catalyst or a bismuth-based catalyst, has rapid curability even in a low-temperature environment, and is also excellent in antifouling performance.

### SOLUTION TO PROBLEM

In view of the aforementioned problem, the present inventors made extensive and intensive investigations. As a result, it has been found that by blending a silanol group-containing curable organopolysiloxane, at least one organosilicon crosslinking agent selected from a hydrolyzable group-containing organosilane and a partially hydrolyzed condensate thereof, and an alkali metal compound as a curing catalyst, an antifouling coating composition which does not use a tin-based catalyst or a bismuth-based catalyst, has rapid curability even in a low-temperature environment, and is also excellent in antifouling performance is obtained, thereby leading to accomplishment of the present invention.

The present invention an antifouling coating composition containing (A) a curable organopolysiloxane having at least two silanol groups in one molecule, (B) at least one organosilicon crosslinking agent selected from an organosilane having at least two hydrolyzable groups in one molecule and a partially hydrolyzed condensate thereof, (C) a curing catalyst, and (H) an organic solvent, wherein the curing catalyst (C) contains an alkali metal compound containing at least one alkali metal, and the alkali metal compound is a carboxylic acid alkali metal salt

containing a carboxylic acid having 6 to 24 carbon atoms.

Further embodiments of the antifouling coating composition, a kit for preparing the antifouling coating composition, an antifouling coating film, and a substrate with an antifouling coating film and a method for producing a substrate with an antifouling coating film according to the present invention are described below and in the appended claims.

### ADVANTAGEOUS EFFECTS OF INVENTION

In accordance with the present invention, it is possible to provide an antifouling coating composition which does not use a tin-based catalyst or a bismuth-based catalyst, has rapid curability even in a low-temperature environment, and is also excellent in antifouling performance.

In addition, in accordance with the present invention, it is possible to provide a kit for preparing the antifouling coating composition, an antifouling coating film formed of the antifouling coating composition, and a substrate with the antifouling coating film and a method for producing the same.

## DESCRIPTION OF EMBODIMENTS

The antifouling coating composition, the kit for preparing an antifouling coating composition, the antifouling coating film, and the substrate with an antifouling coating film and the method for producing the same according to the present invention are hereunder described in detail. It should be construed that the present invention is not limited to the following embodiments and can be modified in various ways and carried out within the scope and spirit thereof.

[Antifouling Coating Composition]

The antifouling coating composition of the present invention (hereinafter also referred to simply as "coating composition") contains (A) a curable organopolysiloxane having at least two silanol groups in one molecule, (B) at least one organosilicon crosslinking agent selected from an organosilane having at least two hydrolyzable groups in one molecule and a partially hydrolyzed condensate thereof, (C) a curing catalyst, and (H) an organic solvent.

[Curable Organopolysiloxane (A)]

The antifouling coating composition of the present invention contains (A) a curable organopolysiloxane having at least two silanol groups in one molecule (hereinafter also referred to simply as "curable organopolysiloxane (A)") for the purpose of enhancing the antifouling performance of the antifouling coating film. The curable organopolysiloxane (A) may be used alone or in combination of two or more thereof.

Examples of the curable organopolysiloxane (A) which is used in the present invention include ones that are cured by forming a three-dimensional crosslinked structure through reaction of reactive groups contained in the molecule thereof with each other, or reaction of the reactive groups contained therein with a reactive group of an organosilicon crosslinking agent (B) as described later. Examples of the reaction of the reactive groups include condensation reaction and addition reaction, and examples of the condensation reaction include dealcoholization reaction, deoximation reaction, and deacetonation reaction.

The curable organopolysiloxane (A) having reactive groups in the molecule thereof is preferably one that forms a silicone rubber at the time of curing, and for example, a compound represented by the following formula (A1) is preferred.

$$R^{11}_{(3-r)}R^{12}_{r}SiO\text{-}(SiR^{13}_{2}O)_{s}\text{-}SiR^{11}_{(3-r)}R^{12}_{r} \cdots \qquad (A1)$$

In the formula (A1),$R^{11}$ and $R^{13}$ each independently represent a hydrogen atom, an alkyl group having 1 to 16 carbon atoms, an alkenyl group having 2 to 16 carbon atoms, an aryl group having 6 to 16 carbon atoms, an aralkyl group having 7 to 16 carbon atoms, or a halogenated alkyl group having 1 to 16 carbon atoms; $R^{12}$'s each independently represent a hydroxy group or a hydrolyzable group; r represents an integer of 1 to 3; and s represents 10 to 10,000, provided that at least two of the plural groups represented by $R^{12}$ represent a hydroxy group.

The alkyl group having 1 to 16 carbon atoms represented by $R^{11}$ and $R^{13}$ may be linear or branched, and examples thereof include a methyl group, an ethyl group, a propyl group, a butyl group, a pentyl group, a hexyl group, an octyl group, a decyl group, a dodecyl group, and a hexadecyl group.

The alkenyl group having 2 to 16 carbon atoms represented by $R^{11}$ and $R^{13}$ may be any of linear, branched, or cyclic, and examples thereof include a vinyl group, an allyl group, a propenyl group, an isopropenyl group, a butenyl group, an isobutenyl group, a pentenyl group, a hexenyl group, a cyclohexenyl group, an octenyl group, a decenyl group, and a dodecenyl group.

The aryl group having 6 to 16 carbon atoms represented by $R^{11}$ and $R^{13}$ may have a substituent, such as an alkyl group, on the aromatic ring thereof, and examples thereof include a phenyl group, a tolyl group (methylphenyl group), a xylyl group (dimethylphenyl group), and a naphthyl group.

Examples of the aralkyl group having 7 to 16 carbon atoms represented by $R^{11}$ and $R^{13}$ include a benzyl group, a 2-phenylethyl group, a 2-naphthylethyl group, and a diphenylmethyl group.

Examples of the halogenated alkyl group having 1 to 16 carbon atoms represented by $R^{11}$ and $R^{13}$ include groups in which a part or the whole of hydrogen atoms contained in the alkyl group are substituted with a halogen atom, such as a fluorine atom, a chlorine atom, a bromine atom, and an iodine atom.

Of these, $R^{11}$ is preferably a hydrogen atom, an alkyl group having 1 to 16 carbon atoms, an alkenyl group having 2 to 16 carbon atoms, or an aryl group having 6 to 16 carbon atoms, more preferably a methyl group, an ethyl group, a vinyl group, or a phenyl group, and still more preferably a methyl group.

$R^{13}$ is preferably a hydrogen atom, an alkyl group having 1 to 16 carbon atoms, an alkenyl group having 2 to 16 carbon atoms, or an aryl group having 6 to 16 carbon atoms, more preferably a methyl group, an ethyl group, a vinyl group, or a phenyl group, still more preferably a methyl group, an ethyl group, or a phenyl group, and yet still more preferably a methyl group or a phenyl group.

The plural groups represented by $R^{13}$ may be the same as or different from each other. In addition, when plural $R^{11}$'s are existent, they may be the same as or different from each other.

$R^{12}$'s in the formula (A1) each independently represent a hydroxy group or a hydrolyzable group, provided that at least two of the plural groups represented by $R^{12}$ represent a hydroxy group.

Examples of the hydrolyzable group represented by $R^{12}$ include an oxime group, an acyloxy group, an alkoxy group, an alkenyloxy group, an amino group, an amide group, and an aminoxy group.

The oxime group represented by $R^{12}$ is preferably an oxime group having 1 to 10 carbon atoms, and examples

thereof include a dimethyl ketoxime group, a methyl ethyl ketoxime group, a diethyl ketoxime group, and a methyl isopropyl ketoxime group.

The acyloxy group (RC(=O)O-) represented by $R^{12}$ is preferably an aliphatic acyloxy group having 1 to 10 carbon atoms or an aromatic acyloxy group having 7 to 13 carbon atoms, and examples thereof include an acetoxy group, a propionyloxy group, a butylyloxy group, and a benzoyloxy group.

The alkoxy group represented by $R^{12}$ is preferably an alkoxy group having 1 to 10 carbon atoms. As for the alkoxy group represented by $R^{12}$, an ether group (-O-) may intervene between carbon-carbon bonds of the alkyl chain.

Specific examples of the alkoxy group represented by $R^{12}$ include a methoxy group, an ethoxy group, a propoxy group, a butoxy group, a methoxyethoxy group, and an ethoxyethoxy group.

The alkenyloxy group represented by $R^{12}$ is preferably an alkenyloxy group having 3 to 10 carbon atoms, and examples thereof include an isopropenyloxy group, an isobutenyloxy group, and a 1-ethyl-2-methylvinyloxy group.

The amino group represented by $R^{12}$ may be any of a primary amino group, a secondary amino group, and a tertiary amino group, and above all, a secondary amino group and a tertiary amino group are preferred, and an amino group having 1 to 10 carbon atoms is more preferred. Preferred examples of the amino group include a N-methylamino group, a N-ethylamino group, a N-propylamino group, a N-butylamino group, a N,N-dimethylamino group, a N,N-diethylamino group, and a N-cyclohexylamino group.

In this specification, the primary amino group means a group represented by $-NH_2$, the secondary amino group means a group in which one hydrogen atom of $-NH_2$ is substituted with an alkyl group or the like, and the tertiary amino group means a group in which two hydrogen atoms of $-NH_2$ are substituted with an alkyl group or the like.

The amide group represented by $R^{12}$ is preferably an amide group having 2 to 10 carbon atoms, and examples thereof include a N-methylacetamide group, a N-ethylacetamide group, and a N-methylbenzamide group.

The aminoxy group represented by $R^{12}$ is preferably an aminoxy group having 2 to 10 carbon atoms, and examples thereof include a N,N-dimethylaminoxy group and a N,N-diethylaminoxy group.

Of these, $R^{12}$ is preferably a hydroxy group, an oxime group, or an alkoxy group, more preferably a hydroxy group or an oxime group, and still more preferably a hydroxy group. In addition, though the plural groups represented by $R^{12}$ may have one or more hydrolyzable groups in addition to at least two hydroxy groups, it is preferred that all of the plural groups represented by $R^{12}$ are a hydroxy group.

In the formula (A1), r represents an integer of 1 to 3.

In the case where $R^{12}$ is a hydroxy group, r is preferably 1, and in the case where $R^{12}$ contains a hydroxy group and a hydrolyzable group, r is preferably 2.

In the formula (A1), s represents 10 to 10,000, and preferably 100 to 1,000, and s can be appropriately regulated so as to satisfy the following weight average molecular weight.
s means an average repeating number of $-(SiR^{13}_2-O)-$.

The curable organopolysiloxane (A) having at least two silanol groups in one molecule is preferably a compound having a hydroxy group at both ends thereof, and examples of such a compound include a compound represented by the following general formula (A2).

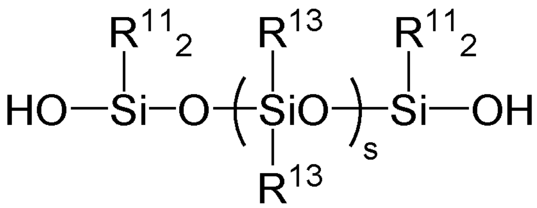
( A2 )

In the formula (A2), $R^{11}$, $R^{13}$, and s are the same as those in the formula (A1), and preferred examples thereof are also the same.

From the viewpoint of improving the workability at the time of production of a coating composition and the viewpoint of improving the spraying atomization performance and the curability of the coating composition and the strength of the formed coating film, a weight average molecular weight (Mw) of the curable organopolysiloxane (A) is preferably 500 or more, more preferably 5,000 or more, still more preferably 10,000 or more, yet still more preferably 15,000 or more, and even yet still more preferably 20,000 or more, and it is preferably 1,000,000 or less, more preferably 100,000 or less, still more preferably 50,000 or less, and yet still more preferably 40,000 or less.

In the present invention, the term "weight average molecular weight (Mw)" of the curable organopolysiloxane (A), an ether group-containing polymer (E) as mentioned later, and the like is one obtained through measurement by GPC (gel permeation chromatography) and calculation as expressed in terms of standard polystyrene having an already-known molecular weight.

From the viewpoint of improving the workability at the time of production of a coating composition and the

viewpoint of improving the spraying atomization performance and the curability of the coating composition and the strength of the formed coating film, a viscosity at 23°C of the curable organopolysiloxane (A) is preferably 20 mPa·s or more, more preferably 100 mPa·s or more, and still more preferably 500 mPa·s or more, and it is preferably 100,000 mPa·s or less, more preferably 10,000 mPa·s or less, and still more preferably 5,000 mPa·s or less.

In this description, the viscosity at 23°C of the curable organopolysiloxane (A) refers to a viscosity measured with a B-type rotary viscometer (for example, Model: BM, manufactured by Tokyo Keiki, Inc.).

From the viewpoint of improving the strength of the coating film, the content of the curable organopolysiloxane (A) in the antifouling coating composition is preferably 10% by mass or more, more preferably 20% by mass or more, and still more preferably 30% by mass or more, and it is preferably 90% by mass or less, more preferably 80% by mass or less, and still more preferably 70% by mass or less.

The content of the curable organopolysiloxane (A) in the solid content of the antifouling coating composition is preferably 15% by mass or more, more preferably 25% by mass or more, and still more preferably 35% by mass or more, and it is preferably 95% by mass or less, more preferably 85% by mass or less, and still more preferably 75% by mass or less.

In this specification, the term "solid content of the antifouling coating composition" refers to the ingredient excluding an organic solvent (H) as mentioned later and volatile components contained as a solvent in the respective ingredients, and the term "content in the solid content of the antifouling coating composition" can be calculated as the content in the solid content obtained by drying the antifouling coating composition in a hot air dryer at 125°C for 1 hour.

As the curable organopolysiloxane (A), a commercially available product can be used. Examples of the commercially available product include "DMS-S35", manufactured by Gelest, Inc. In addition, one described in JP 2001-139816 A can also be used as the curable organopolysiloxane (A).

[Organosilicon Crosslinking Agent (B)]

The antifouling coating film of the present invention and the antifouling coating composition for forming the antifouling coating film each contain at least one organosilicon crosslinking agent (B) selected from an organosilane having at least two hydrolyzable groups in one molecule and a partially hydrolyzed condensate thereof (hereinafter also referred to simply as "organosilicon crosslinking agent (B)") for the purpose of improving the curability of the antifouling coating film and the strength of the coating film.

The organosilicon crosslinking agent (B) is preferably at least one selected from a compound represented by the following formula (B1) and a partially hydrolyzed condensate thereof.

$$R^{21}{}_{d}SiY_{(4-d)} \ldots \qquad (B1)$$

In the formula (B1), $R^{21}$ represents a monovalent hydrocarbon group having 1 to 6 carbon atoms; Y's each independently represent a hydrolyzable group; and d represents an integer of 0 to 2.

$R^{21}$ in the formula (B1) represents a hydrocarbon group having 1 to 6 carbon atoms, and examples thereof include a linear or branched alkyl group, such as a methyl group, an ethyl group, and a propyl group, a cyclic alkyl group, such as a cyclohexyl group, an alkenyl group, such as a vinyl group, and an aryl group, such as a phenyl group. Of these, a methyl group and an ethyl group are preferred.

When d is 2, then the plural groups represented by $R^{21}$ may be the same as or different from each other.

Y's in the formula (B1) each independently represent a hydrolyzable group, and examples of the hydrolyzable group include the hydrolyzable groups exemplified for $R^{12}$ in the formula (A1). Of these, an alkoxy group and an oxime group are preferred, an alkoxy group is more preferred, and a methoxy group and an ethoxy group are still more preferred. The plural groups represented by Y may be the same as or different from each other.

d in the formula (B1) represents an integer of 0 to 2, and it is preferably 0 from the viewpoint of improving the curability of the antifouling coating film and the strength of the coating film.

In the present invention, the term "hydrocarbon group" means a group composed only of carbon and hydrogen unless specifically indicated, and it includes a saturated or unsaturated, linear or branched aliphatic group, an alicyclic group, and an aromatic group.

In the case where the organosilicon crosslinking agent (B) is a partially hydrolyzed condensate of an organosilane having at least two hydrolyzable group in one molecule, it may be a partially hydrolyzed condensate of one organosilane or may be a partially hydrolyzed condensate of two or more organosilanes.

As the organosilicon crosslinking agent (B), a commercially available product can be used. As the commercially available product, examples of tetraethyl orthosilicate include "ETHYL SILICATE 28", manufactured by Colcoat Co., Ltd. and "ETHYL ORTHOSILICATE", manufactured by Tama Chemicals Co., Ltd. Examples of a partially hydrolyzed condensate of the tetraethyl orthosilicate include "SILICATE 40", manufactured by Tama Chemicals Co., Ltd. and "WACKER SILICATE TES 40 WN", manufactured by Asahi Kasei Wacker Silicone Co., Ltd. Examples of an alkyltrialkoxysilane

include "KBM-13", manufactured by Shin-Etsu Chemical Co., Ltd.

The organosilicon crosslinking agent (B) may be used alone or in combination of two or more thereof.

From the viewpoint of controlling the curing rate of the formed coating film and the viewpoint of improving the strength of the coating film, the content of the organosilicon crosslinking agent (B) in the solid content of the antifouling coating composition of the present invention is preferably 0.2% by mass or more, and more preferably 0.4% by mass or more, and it is preferably 20% by mass or less, and more preferably 10% by mass or less.

The content of the organosilicon crosslinking agent (B) in the coating composition can be analyzed by an analysis method, such as gas chromatography. For example, the silane compound can be qualitatively analyzed from a mass pattern of peaks detected by the gas chromatography-mass spectrometry, and by preparing a calibration curve with a standard substance, each of the ingredients can also be quantitatively analyzed.

[Curing Catalyst (C)]

The antifouling coating composition of the present invention contains a curing catalyst (C) for the purposes of improving the curing rate of the formed coating film and improving the strength of the coating film.

The curing catalyst (C) according to the present invention contains an alkali metal compound containing at least one alkali metal and the alkali metal compound is a carboxylic acid alkali metal salt containing a carboxylic acid having 6 to 24 carbon atoms (hereinafter also referred to as "alkali metal compound (C1)"). Although the alkali metal compound (C1) is not particularly restricted so long as it is a compound containing at least one alkali metal, it is preferably a lithium compound, a sodium compound, or a potassium compound, with a lithium compound being most preferred from the viewpoint of low-temperature curability and storage stability and coating workability of the coating composition. When the alkali metal compound (C1) is contained as the curing catalyst (C), a possibility of restrictions to be applied for use due to laws and regulations as in a tin-based catalyst is low, and therefore, it is possible to blend a large amount of the curing catalyst (C) in the coating composition.

One kind or two or more kinds of the alkali metal compound (C 1) may be contained in the curing catalyst (C).

The alkali metal compound (C1) is a carboxylic acid alkali metal salt containing a carboxylic acid having 6 to 24 carbon atoms. The carboxylic acid having 6 to 24 carbon atoms is preferably a long-chain carboxylic acid. The alkali metal compound (C1) is especially preferably a long-chain carboxylic acid alkali metal salt. Here, the long chain in the long-chain carboxylic acid means a chain having 6 or more carbon atoms.

In the alkali metal compound (C1), the carboxylic acid constituting the carboxylic acid alkali metal salt is preferably a monocarboxylic acid.

One kind or two or more kinds of the carboxylic acid having 6 to 24 carbon atoms may be contained. However, from the viewpoint of easiness of production of the coating composition and improvement of the antifouling performance, the carboxylic acid having 6 to 24 carbon atoms preferably contains two or more carboxylic acids. In the case where the carboxylic acid having 6 to 24 carbon atoms contains two or more carboxylic acids, it may be an isomer mixture or may be a mixture of plural carboxylic acids in which the carbon number is different from each other. Furthermore, it may also be a combination thereof.

The hydrocarbon chain constituting the carboxylic acid may be saturated or unsubstituted, may be linear or branched, and may have a cyclic structure. In the case of a branched structure, the length of the longest chain is preferably 6 or more in terms of a carbon number.

The carbon number of the carboxylic acid is preferably 6 to 24, more preferably 8 to 22, and still more preferably 8 to 16.

Specific examples of the carboxylic acid include hexanoic acid, heptanoic acid, 2-ethylhexanoic acid, octanoic acid, nonanoic acid, versatic acid, decanoic acid, neodecanoic acid, undecanoic acid, dodecanoic acid, tridecanoic acid, tetradecanoic acid, pentadecanoic acid, hexadecanoic acid, heptadecanoic acid, octadecanoic acid, nonadecanoic acid, eicosanoic acid, behenic acid, erucic acid, oleic acid, linoleic acid, linolenic acid, and naphthenic acid. Of these, long-chain carboxylic acids having a linear or branched hydrocarbon chain are preferred; long-chain carboxylic acids having a linear or branched alkyl chain are more preferred; 2-ethylhexanoic acid, octanoic acid, nonanoic acid, decanoic acid, and versatic acid are still more preferred; and 2-ethylhexanoic acid, octanoic acid, and versatic acid are yet still more preferred. The versatic acid as referred to herein is a monocarboxylic acid mixture composed mainly of a monocarboxylic acid having 10 carbon atoms (inclusive of an isomer mixture), and an alkali metal salt of versatic acid is an alkali metal salt of a long-chain carboxylic acid containing two or more carboxylic acids.

In the case where the alkali metal compound (C 1) is at least one selected from a lithium compound, a sodium compound, and a potassium compound, preferred examples thereof include lithium 2-ethylhexanoate, lithium octanoate, lithium versatate, sodium 2-ethylhexanoate, sodium octanoate, sodium versatate, potassium 2-ethylhexanoate, potassium octanoate, and potassium versatate. Above all, from the viewpoint of easiness of production of the coating composition and improvement of the antifouling performance, lithium versatate, sodium versatate, and potassium versatate are more preferred, and lithium versatate is especially preferred.

The curing catalyst (C) preferably contains a metal compound (C2) other than the alkali metal compound (C1) . Examples of the metal other than the alkali metal which is contained in the metal compound (C2) include zinc, zirconium, barium, calcium, and strontium. Of these, zinc is preferred.

From the viewpoint of antifouling performance and curability, the metal compound (C2) is preferably a zinc compound, and examples thereof include a carboxylic acid zinc salt and an acetylacetone zinc complex. Above all, a carboxylic acid zinc salt is preferred.

Examples of the carboxylic acid constituting the carboxylic acid zinc salt include the aforementioned carboxylic acids having 6 to 24 carbon atoms.

Specifically, examples of the carboxylic acid zinc salt include zinc 2-ethylhexanoate, zinc octanoate, zinc nonanoate, zinc decanoate, zinc naphthenate, zinc stearate, zinc neodecanoate, and zinc oleate. Of these, zinc octanoate, zinc nonanoate, and zinc decanoate are preferred.

One kind or two or more kinds of the metal compound (C2) may be contained.

As the curing catalyst (C), a commercially available product can be used. For example, in the case of the lithium compound, "K-KAT XK-618" and "K-KAT XK-624", all of which are manufactured by King Industries, Inc., and "Borchers Deca Lithium 2", manufactured by OMG Borchers GmbH are exemplified; in the case of the sodium compound, "Sodium Hexoate 3%", manufactured by Toei Chemical Industry Co., Ltd. is exemplified; and in the case of the potassium compound, "15% Potassium Hex-Cem", manufactured by OMG Borchers GmbH and "Potassium Hexoate 10%", manufactured by Toei Chemical Industry Co., Ltd. are exemplified. All of the above-exemplified commercially available curing catalysts are those containing a carboxylic acid alkali metal salt and are those containing, as the carboxylic acid, two or more long-chain saturated monocarboxylic acids, such as an isomer mixture.

From the viewpoint of improving the curing rate of the formed coating film and the viewpoint of enhancing a balance between the curing rate and the pot life after preparing the coating composition, the content of the curing catalyst (C) in the solid content of the antifouling coating composition of the present invention is preferably 0.001% by mass or more, and more preferably 0.01% by mass or more, and it is preferably 10% by mass or less, more preferably 6% by mass or less, and still more preferably 4% by mass or less.

The content of the alkali metal in the curing catalyst (C) is preferably 50% by mass or more, more preferably 70% by mass or more, still more preferably 85% by mass or more, and yet still more preferably 90% by mass or more relative to the total amount of metals in the curing catalyst (C). The content of the alkali metal is preferably 100% by mass or less. When the content of the alkali metal relative to the total amount of metals in the curing catalyst (C) falls within the aforementioned range, the antifouling coating composition has rapid curability even in a low-temperature environment and is also excellent in antifouling performance.

In the case where the curing catalyst (C) contains a zinc compound, the content of zinc in the curing catalyst (C) is preferably 50% by mass or less, more preferably 30% by mass or less, and still more preferably 15% by mass or less relative to the total amount of metals in the curing catalyst (C).

The content of the alkali metal in the antifouling coating composition of the present invention is preferably 100 mg/kg or more, more preferably 130 mg/kg or more, still more preferably 200 mg/kg or more, and yet still more preferably 300 mg/kg or more. When the content of the alkali metal in the antifouling coating composition falls within the aforementioned range, the antifouling coating composition has rapid curability even in a low-temperature environment and is also excellent in antifouling performance.

As for the curing catalyst (C), the identification of the kinds of the various metal elements contained, the measurement of the contents thereof, and the measurement of metals contained in the coating composition can be, for example, measured by the ICP atomic emission spectroscopy, the ion chromatography, the RBS method, the AES method, or the fluorescent X-ray method. Of these, the ICP atomic emission spectroscopy is preferred for the measurement.

[Organic Solvent (H)]

The antifouling coating composition of the present invention contains an organic solvent (H) for the purpose of improving the coating workability by keeping the viscosity of the coating composition low, to improve the spraying atomization performance.

Examples of the organic solvent (H) include an aromatic hydrocarbon-based organic solvent, an aliphatic hydrocarbon-based organic solvent, an alicyclic hydrocarbon-based organic solvent, a ketone-based organic solvent, an alcohol-based organic solvent, and an ester-based organic solvent. Of these, it is preferred to contain at least one selected from an aromatic hydrocarbon-based organic solvent, a ketone-based organic solvent, and an alcohol-based organic solvent. From the viewpoint of prolonging the pot life, it is especially preferred to contain an alcohol-based organic solvent.

As the alcohol-based organic solvent, a linear, branched, or cyclic monohydric alcohol in which an ether group (-O-) may intervene between carbon-carbon bonds of the hydrocarbon chain is exemplified. Examples thereof include

methanol, ethanol, 1-propanol, 2-propanol, 1-butanol, 2-butanol, isobutyl alcohol, 1-pentanol, 2-pentanol, 3-pentanol, 1-hexanol, 2-hexanol, 3-hexanol, and propylene glycol monomethyl ether. In addition, such an alcohol-based organic solvent may be used alone or in combination of two or more thereof.

The alcohol-based organic solvent is preferably a monohydric alcohol having 1 to 5 carbon atoms, more preferably a linear alcohol having 1 to 5 carbon atoms, still more preferably a linear alcohol having 2 to 4 carbon atoms, and especially preferably 1-butanol. When the organic solvent (H) is a monohydric alcohol having 1 to 5 carbon atoms, especially 1-butanol, a long time after mixing the antifouling coating composition is readily obtained as the pot life, and furthermore, the antifouling performance of the formed antifouling coating film becomes excellent.

In the antifouling coating composition of the present invention, specifically, the organic solvents exemplified in WO 2018/123928 A can be used as the organic solvent other than the alcohol-based organic solvent. The organic solvent (H) may be used alone or in combination of two or more thereof.

Though the content of the organic solvent (H) in the coating composition can be appropriately regulated depending on the viscosity of the coating composition, it is preferably 1% by mass or more, more preferably 10% by mass or more, still more preferably 15% by mass or more, and yet still more preferably 20% by mass or more, and from the viewpoint of suppressing the sagging at the time of coating, it is preferably 70% by mass or less, and more preferably 40% by mass or less.

In the case where the organic solvent (H) contains an alcohol-based organic solvent, the content of the alcohol-based organic solvent in the organic solvent (H) is preferably 8% by mass or more, more preferably 12% by mass or more, and still more preferably 14% by mass or more, and it is preferably 60% by mass or less, more preferably 40% by mass or less, and still more preferably 20% by mass or less.

<Optional Ingredients>

The antifouling coating composition of the present invention may contain, in addition to the curable organopolysiloxane (A), the organosilicon crosslinking agent (B), and the curing catalyst (C), a silicone oil (D), an ether group-containing polymer (E), an inorganic filler (F), a coloring pigment (G), an antifouling agent (I), a silane coupling agent (J), an anti-sagging and anti-settling agent (K), an enzyme (L), and the like, as the need arises. The optional ingredient may be used alone or in combination of two or more thereof. In the present invention, for example, a coating composition containing, as an optional ingredient, at least one selected from the group consisting of a silicone oil (D) and an ether group-containing polymer (E) can be preferably exemplified.

[Silicone Oil (D)]

The antifouling coating composition of the present invention may contain a silicone oil (D) for the purpose of improving the antifouling performance of the formed antifouling coating film.

The silicone oil (D) is preferably a silicone oil represented by the following formula (D 1).

$$R^{31}{}_3SiOR^{33}(SiR^{32}{}_2OR^{33})_tSiR^{31}{}_3 \ldots \qquad (D1)$$

In the formula (D1), $R^{31}$ and $R^{32}$ each independently represent a hydrogen atom, or an alkyl group, an alkenyl group, an aryl group, an aralkyl group, or a halogenated alkyl group, each of which have 1 to 50 carbon atoms and may have a hetero atom in the structure thereof $R^{33}$ represents a single bond or a divalent hydrocarbon group having 1 to 50 carbon atoms and optionally having a group having a hetero atom intervening therein; and t represents an integer of 10 to 1,000.

In the case where $R^{31}$ and $R^{32}$ each represent an alkyl group, an alkenyl group, an aryl group, an aralkyl group, or a halogenated alkyl group, each of which have 1 to 50 carbon atoms, they may each independently one having a hetero atom in the structure thereof, namely one containing a group having a hetero atom in the structure thereof.

Examples of the group having a hetero atom include an ether group, a thioether group, an ester group, an amide group, an amino group, a hydroxy group, a carboxy group, and a thiol group. The term "containing a group having a hetero atom in the structure thereof' means that for example, in the case of an alkyl group, a structure in which a group having a hetero atom intervenes between carbon-carbon bonds of the alkyl group, or the hydrogen atom of the alkyl group is substituted with a group having a hetero atom. One kind or two or more kinds of the group having a hetero atom may be contained.

The plural groups represented by $R^{31}$ and $R^{32}$ may be the same as or different from each other, respectively.

As the silicon oil (D), one in which $R^{31}$ and $R^{32}$ are constituted only of an alkyl group, or one in which $R^{31}$ and $R^{32}$ are constituted of an alkyl group and an aryl group is preferred.

The silicone oil (D) in which $R^{31}$ and $R^{32}$ are constituted only of an alkyl group is preferably one in which all of the plural groups represented by $R^{31}$ and $R^{32}$ are constituted of a methyl group, or one in which $R^{31}$'s and $R^{32}$'s are

constituted of a methyl group and an alkyl group other than a methyl group; and more preferably one in which all of $R^{31}$'s and $R^{32}$'s are constituted of a methyl group, or one in which $R^{31}$'s and $R^{32}$'s are constituted of a methyl group and an alkyl group having an ether group.

Examples of the alkyl group having an ether group include one having the following chemical structure.

$$-R^{34}(C_2H_4O)_a(C_3H_6O)_bR^{35}$$

In the formula, $R^{34}$ represents an alkylene group having 1 to 20 carbon atoms; $R^{35}$ represents an alkyl group having 1 to 20 carbon atoms; a and b each represent an integer of 0 to 30; and (a + b) is an integer of 1 or more.

In this specification, the silicone oil in which all of $R^{31}$'s and $R^{32}$'s are constituted of a methyl group is referred to as "polydimethylsiloxane (unmodified)". In addition, the silicone oil in which $R^{31}$'s and $R^{32}$'s are constituted of a methyl group and an alkyl group having an ether group is referred to as "ether-modified polydimethylsiloxane".

The silicone oil (D) in which $R^{31}$ and $R^{32}$ are constituted of an alkyl group and an aryl group is preferably one in which $R^{31}$ and $R^{32}$ are constituted of a methyl group and a phenyl group; and more preferably one in which the proportion of the phenyl group occupying in all of $R^{31}$ and $R^{32}$ (phenyl modification rate) is 3 to 50%.

In this specification, the silicone oil in which $R^{31}$ and $R^{32}$ are constituted of a methyl group and a phenyl group is also referred to as "phenyl-modified polydimethylsiloxane".

$R^{33}$ in the formula (D1) represents a single bond or a divalent hydrocarbon group having 1 to 50 carbon atoms and optionally having a group having a hetero atom intervening therein. Examples of the group having a hetero atom include a group represented by $-NR^a-$ ($R^a$ represents a hydrogen atom or a monovalent hydrocarbon group having 1 to 10 carbon atoms), an ether group (-O-), a thioether group (-S-), an ester group (-C(=O)-O-), and an amide group $(-C(=O)-NR^{b-}$, wherein $R^b$ represents a hydrogen atom or a monovalent hydrocarbon group having 1 to 10 carbon atoms).

Examples of the divalent hydrocarbon group having 1 to 50 carbon atoms represented by $R^{33}$ include linear alkylene groups, such as a methylene group, an ethylene group, a trimethylene group, a tetramethylene group, a hexamethylene group, an octamethylene group, a decamethylene group, a dodecamethylene group, a tetradecamethylene group, a hexadecamethylene group, an octadecamethylene group, and an icosalene group; and branched alkylene groups, such as a propylene group, an isopropylene group, an isobutylene group, a 2-methyltrimethylene group, an isopentylene group, an isohexylene group, an isooctylene group, a 2-ethylhexylene group, and an isodecylene group.

Examples of the hetero atom include an oxygen atom, a nitrogen atom, and a sulfur atom.

The plural groups represented by $R^{33}$ may be the same as or different from each other.

$R^{33}$ is preferably a single bond.

In the case where $R^{33}$ represents a divalent hydrocarbon group having 1 to 50 carbon atoms and having an ether group intervening therein, examples thereof include one having the following chemical structure.

$$-R^{36}(C_2H_4O)_c(C_3H_6O)_dR^{37}-$$

In the formula, $R^{36}$ and $R^{37}$ each independently represent an alkylene group having 1 to 10 carbon atoms; c and d each represent an integer of 0 to 30; and (c + d) is an integer of 1 or more.

As the silicone oil (D), a commercially available product can be used. Examples of the commercially available product include "KF-96-1,000cs" (manufactured by Shin-Etsu Chemical Co., Ltd.) for the polydimethylsiloxane (unmodified); "KF-50-1,000cs" (manufactured by Shin-Etsu Chemical Co., Ltd., phenyl modification rate: 5%) for the phenyl-modified polydimethylsiloxane; and "X-22-4272" (an ether-modified polydimethylsiloxane, in which a part of $R^{31}$ is an alkyl group having an ether group), "KF-6020" (manufactured by Shin-Etsu Chemical Co., Ltd., an ether-modified polydimethylsiloxane, in which a part of $R^{32}$ is an alkyl group having an ether group), and "FZ-2203" (manufactured by Dow Corning Toray Co., Ltd., a polydimethylsiloxane, in which a part of $R^{33}$ is an alkylene group having an ether group) for the ether-modified polydimethylsiloxane.

The silicone oil (D) may be used alone or in combination of two or more thereof.

From the viewpoint of improving the workability at the time of production of a coating composition and the viewpoint of improving the spraying atomization performance and the curability of the coating composition and the strength of the formed coating film, a viscosity at 23°C of the silicone oil (D) is preferably 10 mPa·s or more, more preferably 20 mPa·s or more, still more preferably 40 mPa·s or more, yet still more preferably 60 mPa·s or more, and even yet still more preferably 80 mPa·s or more, and it is preferably 10,000 mPa·s or less, more preferably 5,000 mPa·s or less, and still more preferably 4,000 mPa·s or less.

In this specification, the viscosity at 23°C of the silicone oil (D) refers to a viscosity measured with a B-type rotary viscometer.

In the case where the antifouling coating composition of the present invention contains the silicone oil (D), from the viewpoint of improving the antifouling performance of the formed antifouling coating film, the content of the silicone oil (D) in the solid content of the coating composition is preferably 0.1% by mass or more, more preferably 1% by mass

or more, and still more preferably 3% by mass or more, and it is preferably 50% by mass or less, more preferably 40% by mass or less, and still more preferably 30% by mass or less.

[Ether Group-Containing Polymer (E)]

The antifouling coating composition of the present invention may contain an ethyl group-containing polymer (E) for the purpose of improving the antifouling performance of the antifouling coating film.

The ethyl group-containing polymer (E) is preferably a polymer having a structural unit derived from an unsaturated monomer represented by the following general formula (E 1).

$$H_2C=CR^{41}X^1[(R^{42}O)_u(R^{43}O)_v]R^{44} \quad ... \qquad (E1)$$

In the formula (E 1), $R^{41}$ represents a hydrogen atom or a monovalent hydrocarbon group having 1 to 10 carbon atoms; $R^{42}$ represents an ethylene group or a propylene group; $R^{43}$ represents a divalent hydrocarbon group having 4 to 10 carbon atoms; $R^{44}$ represents a hydrogen atom or a monovalent hydrocarbon group having 1 to 30 carbon atoms; u represents an integer of 1 to 50; v represents an integer of 0 to 50; and $X^1$ represents an ester bond, an amide bond, or a single bond.

In the formula (E 1), $R^{41}$ represents a hydrogen atom or a monovalent hydrocarbon group having 1 to 10 carbon atoms, and examples of the monovalent hydrocarbon group include alkyl groups, such as a methyl group and an ethyl group; alkenyl groups, such as a vinyl group, an allyl group, a propenyl group, and an isopropenyl group; aryl groups, such as a phenyl group; and aralkyl groups, such as a benzyl group, with alkyl groups being preferred. The carbon number of the monovalent hydrocarbon group is preferably 1 to 6, more preferably 1 to 4, still more preferably 1 or 2, and especially preferably 1 (namely, the monovalent hydrocarbon group is a methyl group). $R^{41}$ is preferably a hydrogen atom or a methyl group, and more preferably a hydrogen atom.

In the formula (E 1), $R^{42}$ represents an ethylene group or a propylene group. In the case where u is 2 or more, the plural groups represented by $R^{42}$ may be the same as or different from each other. In the case where u is 2 or more, it is preferred to have at least one ethylene group. $R^{42}$ is preferably an ethylene group.

$R^{43}$ represents a divalent hydrocarbon group having 4 to 10 carbon atoms, and examples thereof of such a group include alkylene groups, such as a butylene group; alkenylene groups; and arylene groups, such as a phenylene group. Of these, alkylene groups are preferred, and a butylene group is more preferred. In the case where v is an integer of 2 or more, the plural groups represented by $R^{43}$ may be the same as or different from each other.

$R^{44}$ represents a hydrogen atom or a monovalent hydrocarbon group having 1 to 30 carbon atoms. Examples of the monovalent hydrocarbon group include a linear, branched, or cyclic saturated or unsaturated aliphatic hydrocarbon group and an aromatic hydrocarbon group, and more specific examples thereof include a methyl group, an ethyl group, a propyl group, a propenyl group, a butyl group, a hexyl group, a cyclohexyl group, a phenyl group, an octyl group, a dodecyl group, an octadecyl group, and a nonylphenyl group. $R^{44}$ is preferably a hydrogen atom or a methyl group, and more preferably a methyl group.

In view of the fact that $R^{44}$ is such a substituent, the ether group-containing polymer (E) exhibits preferred hydrophilicity, and an excellent antifouling performance can be imparted to the obtained coating film.

In the formula (E 1), u is an integer of 1 to 50, and preferably an integer of 1 to 15.

In the formula (E 1), v is an integer of 0 to 50, preferably an integer of 0 to 20, and more preferably 0.

In this specification, the case where two or more different repeating units are described in parallel to each other in the brackets shows that the repeating units may be repeated in any form or order of a random form, an alternate form, and a block form. Namely, for example, a formula $-[X_3-Y_3]-$ (wherein X and Y each represent a repeating unit) may be any of a random form -XXYXYY-, an alternate form -XYXYXY-, and a block form -XXXYYY- or -YYYXXX-.

In the formula (E1), $X^1$ represents an ester bond (-C(=O)O-), an amide bond (-C(=O)NH-), or a single bond, and preferably an ester bond (-C(=O)O-).

In the case where $X^1$ represents an ester bond or an amide bond, the carbonyl carbon is preferably bonded to the carbon atom to which $R^{41}$ is bonded.

Examples of such an unsaturated monomer (e1) include 2-hydroxyethyl (meth)acrylate, 2-hydroxypropyl (meth)acrylate, 2-methoxyethyl (meth)acrylate, 2-methoxypropyl (meth)acrylate, polyethylene glycol mono(meth)acrylate, polypropylene glycol mono(meth)acrylate, poly(ethylene glycol-propylene glycol) mono(meth)acrylate, poly(ethylene glycol-butylene glycol) mono(meth)acrylate, methoxypolyethylene glycol mono(meth)acrylate, allyloxypoly(ethylene glycol-propylene glycol) mono(meth)acrylate, phenoxypolyethylene glycol-polypropylene glycol methacrylate, octoxypoly(ethylene glycol-propylene glycol) mono(meth)acrylate, dodecyloxypolyethylene glycol mono(meth)acrylate, octadecyloxypolyethylene glycol mono(meth)acrylate, nonylphenoxypolypropylene glycol acrylate, and ethylene glycol monoallyl ether. Of these, 2-hydroxyethyl (meth)acrylate, 2-hydroxypropyl (meth)acrylate, 2-methoxyethyl (meth)acrylate, 2-methoxypropyl (meth)acrylate, and methoxypolyethylene glycol mono(meth)acrylate are preferred, and 2-methoxyethyl (meth)acrylate, 2-methoxypropyl (meth)acrylate, and methoxypolyethylene glycol mono(meth)acrylate are more preferred.

In this specification, the expression "(meth)acrylate" means "acrylate or methacrylate", and the other similar expressions also have the similar meanings.

As the unsaturated monomer (e1), a commercially available product can be used. Examples thereof include NK Ester AM-90G (methoxypolyethylene glycol #400 acrylate), NK Ester AM-130G (methoxypolyethylene glycol #550 acrylate), NK Ester M-90G (methoxypolyethylene glycol #400 methacrylate), and NK Ester M-230G (methoxypolyethylene glycol #1000 methacrylate), all of which are manufactured by Shin-Nakamura Chemical Co., Ltd.; Light Acrylate MTG-A (methoxy-triethylene glycol acrylate), Light Acrylate EC-A (ethoxy-diethylene glycol acrylate), Light Acrylate EHDG-AT (2-ethylhexyl-diethylene glycol acrylate), Light Ester HOA(N) (2-hydroxyethyl acrylate), Light Ester HO-250(N) (2-hydroxyethyl methacrylate), Light Ester HOP(N) (2-hydroxypropyl methacrylate), and Light Ester 041MA (methoxypolyethylene glycol methacrylate), all of which are manufactured by Kyoeisha Chemical Co., Ltd.; Blemmer ANP-300 (nonylphenoxypolypropylene glycol acrylate), manufactured by NOF Corporation; SR504 (ethoxylated nonylphenyl acrylate), manufactured by Arkema, Inc.; and Viscoat #MTG (methoxypolyethylene glycol acrylate), manufactured by Osaka Organic Chemical Industry, Ltd.

The content of the structural unit derived from the unsaturated monomer (e1) in the ether group-containing polymer (E) is preferably 1% by mass or more, more preferably 3% by mass or more, still more preferably 5% by mass or more, and yet still more preferably 10% by mass or more, and it is preferably 100% by mass or less, more preferably 80% by mass or less, still more preferably 70% by mass or less, and yet still more preferably 50% by mass or less.

A ratio of the content (mass) of the structural unit derived from the unsaturated monomer (e1) in the ether group-containing polymer (E) can be assumed to be the same as a ratio of the charged amount (mass) of the unsaturated monomer (e1) which is used for the polymerization reaction.

In the present invention, the ether group-containing polymer (E) may be a homopolymer having a structural unit derived from one kind of the unsaturated monomer (e1) or may be a copolymer having structural units derived from two or more kinds of the unsaturated monomer (e1).

In the present invention, the ether group-containing polymer (E) is preferably a copolymer having a structural unit derived from one or more kinds of the unsaturated monomer (e1) and optionally, a structural unit derived from one or more kinds of other unsaturated monomer (e2). As the other unsaturated monomer (e2), an unsaturated monomer (e21) represented by the following formula (E2) is preferably contained.

$$H_2C=CR^{45}\text{-}X^2\text{-}R^{46} \ldots \qquad (E2)$$

In the formula (E2), $R^{45}$ represents a hydrogen atom or a monovalent hydrocarbon group having 1 to 10 carbon atoms; $R^{46}$ represents a hydrogen atom or a monovalent hydrocarbon group having 1 to 30 carbon atoms; and $X^2$ represents an ester bond, an amide bond, or a single bond.

In the formula (E2), $R^{45}$ represents a hydrogen atom or a monovalent hydrocarbon group having 1 to 10 carbon atoms. Examples of such a group include the same groups as exemplified above for $R^{41}$ in the formula (E1), with a hydrogen atom and a methyl group being preferred.

In the formula (E2), $R^{46}$ is a monovalent hydrocarbon group having 1 to 50 carbon atoms. Examples of such a group include a linear or branched hydrocarbon group, such as a methyl group, an ethyl group, a propyl group, a propenyl group, a n-butyl group, an isobutyl group, a tert-butyl group, a n-pentyl group, a n-hexyl group, a n-octyl group, an isooctyl group, a 2-ethylhexyl group, a dodecyl group, and an octadecyl group; and a cyclic hydrocarbon group, such as a cyclohexyl group, a phenyl group, and a benzyl group, with a n-butyl group, an isobutyl group, and a 2-ethylhexyl group being preferred.

In the formula (E2), $X^2$ represents an ester bond (-C(=O)O-), an amide bond (-C(=O)NH-), or a single bond. Of these, an ester bond is preferred.

In the case where $X^2$ is an ester bond or an amide bond, the carbonyl carbon is preferably bonded to the carbon atom to which $R^{45}$ is bonded.

Examples of the unsaturated monomer (e21) include methyl (meth)acrylate, ethyl (meth)acrylate, propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, cyclohexyl (meth)acrylate, n-octyl (meth)acrylate, isooctyl (meth)acrylate, 2-ethylhexyl (meth)acrylate, 3,5,5-trimethylhexyl (meth)acrylate, lauryl (meth)acrylate, cetyl (meth)acrylate, stearyl (meth)acrylate, isostearyl (meth)acrylate, phenyl (meth)acrylate, and benzyl (meth)acrylate. Of these, n-butyl (meth)acrylate, isobutyl (meth)acrylate, or 2-ethylhexyl (meth)acrylate is preferably contained.

It is also preferred that an organopolysiloxane group-containing unsaturated monomer (e22) is contained as the other unsaturated monomer (e2).

As the organopolysiloxane group-containing unsaturated monomer (e22), a commercially available product can be used. Examples of the commercially available product include Silaplane TM-0701T (tris(trimethylsiloxy)silylpropyl

methacrylate), Silaplane FM-0711 (methacryloyloxy group-containing dimethylpolysiloxane, average molecular weight: 1,000), and Silaplane FM-0721 (methacryloyloxy group-containing dimethylpolysiloxane, average molecular weight: 5,000), all of which are manufactured by JNC Corporation.

When the organopolysiloxane group-containing unsaturated monomer (e22) is contained as the other unsaturated monomer (e2), though the antifouling performance of the formed antifouling coating film can be improved, the adhesion of the coating film to the underlying material is occasionally lowered, and therefore, it is necessary to appropriately prepare it depending on the kind of the underlying material on which the antifouling coating film is formed.

In the case where the ether group-containing polymer (E) contains a structural unit derived from the other monomer (e2), the content of the structural unit derived from the other monomer (e2) in the ether group-containing polymer (E) is preferably 99% by mass or less, more preferably 97% by mass or less, still more preferably 95% by mass or less, and yet still more preferably 90% by mass or less, and it is preferably 20% by mass or more, more preferably 30% by mass or more, and still more preferably 50% by mass or more.

In the present invention, from the viewpoint of antifouling performance of the formed antifouling coating film and viscosity, a weight average molecular weight (Mw) of the ether group-containing polymer (E) is preferably 1,000 or more, more preferably 3,000 or more, still more preferably 5,000 or more, and especially preferably 7,000 or more, and it is preferably 150,000 or less, more preferably 100,000 or less, still more preferably 50,000 or less, and especially preferably 30,000 or less.

The ether group-containing polymer (E) may be used alone or in combination of two or more thereof.

In the case where the antifouling coating composition of the present invention contains the ether group-containing polymer (E), from the viewpoint of improving the antifouling performance of the antifouling coating film formed from the coating composition and the viewpoint of retaining the strength of the coating film, the content of the ether group-containing polymer (E) in the antifouling coating composition is preferably 0.1% by mass or more, more preferably 0.3% by mass or more, and still more preferably 0.5% by mass or more, and it is preferably 50% by mass or less, more preferably 25% by mass or less, and still more preferably 10% by mass or less.

In the case where the antifouling coating composition of the present invention contains the ether group-containing polymer (E), from the viewpoint of improving the antifouling performance of the antifouling coating film formed from the coating composition and the viewpoint of retaining the strength of the coating film, the content of the ether group-containing polymer (E) in the solid content of the antifouling coating composition is preferably 0.2% by mass or more, more preferably 0.5% by mass or more, and still more preferably 0.8% by mass or more, and it is preferably 80% by mass or less, more preferably 50% by mass or less, and still more preferably 20% by mass or less.

[Inorganic Filler (F)]

The antifouling coating composition of the present invention may contain an inorganic filler (F) for the purpose of improving the flowability and the thixotropy of the coating composition.

In the case where the antifouling coating composition of the present invention contains an inorganic filler (F), the flowability and the thixotropy of the antifouling coating composition are enhanced as mentioned above, and a coating film having a sufficient thickness can be formed in a small number of coating operations even on a vertical coating surface or the like. Furthermore, physical properties of the obtained coating film, such as hardness, tensile strength, and elongation, are improved in a well-balanced manner.

Examples of the inorganic filler (F) include silica, mica, calcium carbonate, aluminum carbonate, magnesium carbonate, barium carbonate, aluminum oxide, aluminum hydroxide, aluminum silicate, magnesium silicate, potassium feldspar, zinc oxide, kaolin, alumina white, barium sulfate, calcium sulfate, zinc sulfide, and glass short fibers. The inorganic filler (F) may be used alone or in combination of two or more thereof.

Of these, silica is preferred as the inorganic filler (F) from the viewpoint of improving physical properties of the coating film, such as hardness, tensile strength, and elongation, in a well-balanced manner.

As the silica, for example, hydrophilic silica (surface-untreated silica), such as wet method silica (hydrated silica) and dry method silica (fumed silica and anhydrous silica), can be used. In addition, hydrophobic silica obtained by hydrophobizing the surface of the aforementioned silica, specifically hydrophobic wet method silica, hydrophobic fumed silica, or the like, can be used. Such silica may be used alone or in combination of two or more thereof.

Although the wet method silica is not particularly restricted, for example, wet method silica having an adsorbed water content of 4 to 8% by mass, a bulk density of 200 to 300 g/L, a primary particle diameter of 10 to 30 pm, and a specific surface area (BET surface area) of 10 $m^2/g$ or more is preferred.

Although the dry method silica is not particularly restricted, for example, dry method silica having a water content of 1.5% by mass or less, a bulk density of 50 to 100 g/L, a primary particle diameter of 8 to 20 pm, and a specific surface area of 10 $m^2/g$ or more is preferred.

Examples of the hydrophobic fumed silica include ones obtained by subjecting dry method silica to a surface treatment with an organosilicon compound, such as methyltrichlorosilane, dimethyldichlorosilane, hexamethyldisilazane,

hexamethylcyclotrisiloxane, and octamethylcyclotetrasiloxane. As for the hydrophobic fumed silica, the water adsorption with time is low, and the water content thereof is preferably 0.3% by mass or less, and more preferably from 0.1 to 0.2% by mass.

Although the hydrophobic fumed silica is not particularly restricted, for example, hydrophobic fumed silica having a primary particle diameter of 5 to 50 nm, a bulk density of 50 to 100 g/L, and a specific surface area of 10 $m^2/g$ or more is preferred. With respect to the hydrophobic fumed silica, in the case of being subjected to the heat treatment as described later, the content of water adsorbed on the surface of the hydrophobic fumed silica after the heat treatment is occasionally decreased. In that case, the water content of the hydrophobic fumed silica is preferably 0.2% by mass or less, more preferably 0.1% by mass or less, and still more preferably 0.05 to 0.1% by mass.

As such silica, a commercially available product can be used. Examples of the commercially available product include "AEROSIL R974", "AEROSIL RX200", and "AEROSIL 200", all of which are manufactured by Nippon Aerosil Co., Ltd. In addition, ones described in JP 2001-139816 A can also be used as the silica.

The silica may be a heat-treated material obtained by previously performing a heat treatment together with the curable organopolysiloxane (A). By previously performing a heat treatment of silica and a part or the whole of the curable organopolysiloxane (A), the affinity of the both ingredients is improved, whereby effects, such as suppression of aggregation of the silica, can be brought.

Examples of a method for performing the heat treatment of the silica and the curable organopolysiloxane (A) include a method of performing a treatment under atmospheric pressure or reduced pressure at a temperature of preferably 100°C or higher and a decomposition temperature of the blending ingredient or lower, more preferably 100 to 300°C, and still more preferably 140 to 200°C for a time of preferably 3 to 30 hours.

The silica may be blended in the coating composition in the form of a kneaded product obtained by kneading together with the curable organopolysiloxane (A). By using the kneaded product obtained by kneading the curable organopolysiloxane (A) and the silica, an excessive increase of the viscosity of the coating composition can be suppressed.

Examples of a method for producing a kneaded product of the silica and the curable organopolysiloxane (A) include the method described in JP 2004-182908 A.

In the case where the coating composition of the present invention contains the inorganic filler (F), the amount of the inorganic filler (F) based on 100 parts by mass of the curable organopolysiloxane (A) is preferably 0.5 parts by mass or more, more preferably 1 part by mass or more, and still more preferably 5 parts by mass or more from the viewpoint of improving the thixotropy of the coating composition and the viewpoint of improving the strength of the coating film and the hardness of the coating film, and it is preferably 100 parts by mass or less, more preferably 50 parts by mass or less, and still more preferably 20 parts by mass or less from the viewpoint of suppressing an excessive increase of the viscosity of the coating composition.

In the case where the coating composition of the present invention contains the inorganic filler (F), from the viewpoint of improving the strength of the coating film and the hardness of the coating film, the content of the inorganic filler (F) in the solid content of the coating composition is preferably 0.1% by mass or more, and more preferably 1% by mass or more, and it is preferably 20% by mass or less, and more preferably 10% by mass or less.

[Coloring Pigment (G)]

The antifouling coating composition of the present invention may contain a coloring pigment (G) exclusive of the inorganic filler (F) for the purpose of improving the designability and the visibility of the coating composition and the coating film thereof.

Examples of the coloring pigment (G) include an inorganic coloring pigment, such as titanium oxide, carbon black, bengal red (red iron oxide), and yellow iron oxide, and an organic coloring pigment, such as naphthol red and phthalocyanine blue. The coloring pigment may further contain various colorants, such as a dye. The coloring pigment (G) may be used alone or in combination of two or more thereof.

In the case where the antifouling coating composition of the present invention contains the coloring pigment (G), the content of the coloring pigment (G) in the solid content of the coating composition is preferably 0.5% by mass or more, and preferably 20% by mass or less.

[Antifouling Agent (I)]

The antifouling coating composition of the present invention may contain an antifouling agent (I) for the purpose of improving the antifouling performance of the formed antifouling coating film. The antifouling agent (I) may be used alone or in combination of two or more thereof.

Examples of the antifouling agent (I) include cuprous oxide, copper rhodanide, copper, a pyrithione salt, 4-bromo-2-(4-chlorophenyl)-5-(trifluoromethyl)-1H-pyrrole-3-carbonitrile (another name: tralopyril), 4,5-dichloro-2-n-octyl-4-isothiazolin-3-one, a borane-nitrogen-based base adduct (such as pyridine-triphenylborane and 4-isopropylpyridine diphenylmethylborane), (+/-)-4-[1-(2,3-dimethylphenyl)ethyl]-1H-imidazole (another name: medetomidine), N,N-dimethyl-N'-(3,4-dichlorophenyl)urea, N-(2,4,6-trichlorophenyl)maleimide, 2-methylthio-4-tert-butylamino-6-cyclopropylamino-1,3,5-triazine, 2,4,5,6-tetrachloroisophthalonitrile, bisdimethyldithiocarbamoyl zinc ethylenebisdithiocarbamate, chloromethyl-n-octyl disulfide, N,N-dimethyl-N'-phenyl-(N'-fluorodichloromethylthio)sulfamide, a tetraalkylthiuram disulfide, zinc dimethyldithiocarbamate, zinc ethylene bisdithiocarbamate, 2,3-dichloro-N-(2',6'-diethylphenyl)maleimide, and 2,3-dichloro-N-(2'-ethyl-6'-methylphenyl)maleimide.

Examples of the pyrithione salt include ones represented by the following general formula (I).

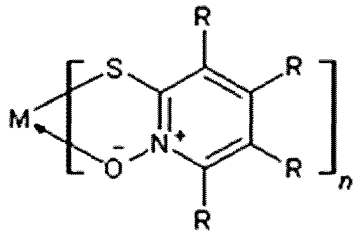

··· (I)

In the formula (I), R's each independently represent an alkyl group having 1 to 6 carbon atoms, a cycloalkyl group having 3 to 6 carbon atoms, an alkenyl group having 2 to 6 carbon atoms, a phenyl group, an alkoxy group having 1 to 6 carbon atoms, or a halogenated alkyl group having 1 to 6 carbon atoms; M represents a metal atom of Cu, Zn, Na, Mg, Ca, Ba, Fe, or Sr; and n is a valence of the metal atom M.

Of these, from the viewpoint of the storage stability and the curability of the antifouling coating composition and the excellent antifouling performance of the formed antifouling coating film, cuprous oxide, copper rhodanide, copper, a pyrithione salt, tralopyril, 4,5-dichloro-2-n-octyl-4-isothiazolin-3-one, and a borane-nitrogen-based base adduct (such as pyridine-triphenylborane and 4-isopropylpyridine diphenylmethylborane) are preferred; a pyrithione salt represented by the formula (I) in which n is 2 is more preferred; a pyrithione salt represented by the formula (I) in which M is Cu or Zn is still more preferred; and a pyrithione salt represented by the formula (I) in which M is Cu is yet still more preferred.

In the case where the antifouling coating composition of the present invention contains the antifouling agent (I), from the viewpoint of improving the antifouling performance of the formed antifouling coating film, the content of the antifouling agent (I) in the solid content of the coating composition is preferably 0.05% by mass or more, and more preferably 1% by mass or more, and it is preferably 50% by mass or less, and more preferably 30% by mass or less.

[Silane Coupling Agent (J)]

The antifouling coating composition of the present invention may contain a silane coupling agent (J) for the purpose of improving the adhesion to the underlying material.

As the silane coupling agent (J), for example, a compound represented by the following formula (J1) is preferably used.

$$(R^{51}O)_wR^{52}{}_{(3-w)}Si\text{-}R^{53}\text{-}Z \quad ... \qquad (J1)$$

In the formula (J1), $R^{51}$ and $R^{52}$ each independently represent a monovalent hydrocarbon group having 1 to 10 carbon atoms; $R^{53}$ represents a divalent hydrocarbon group having 1 to 20 carbon atoms, in which a group having a hetero atom may intervene; Z represents a polar group; and w represents an integer of 2 or 3.

In the formula (J1), $R^{51}$ and $R^{52}$ each independently represent a monovalent hydrocarbon group having 1 to 10 carbon atoms. Examples of the monovalent hydrocarbon group having 1 to 10 carbon atoms represented by $R^{51}$ include an alkyl group having 1 to 10 carbon atoms. Examples of the monovalent hydrocarbon group having 1 to 10 carbon atoms represented by $R^{52}$ include an alkyl group having 1 to 10 carbon atoms, an alkenyl group having 2 to 10 carbon atoms, and an aryl group having 6 to 10 carbon atoms.

Examples of the alkyl group having 1 to 10 carbon atoms represented by $R^{51}$ and $R^{52}$, and the alkenyl group having 2 to 10 carbon atoms and the aryl group having 6 to 10 carbon atoms represented by $R^{52}$ include the groups exemplified for $R^{11}$ and $R^{13}$ in the formula (A1) that have the corresponding number of carbon atoms.

$R^{51}$ in the formula (J1) is preferably a methyl group, an ethyl group, a propyl group, or a butyl group, and more preferably a methyl group.

The plural groups represented by $R^{51}$ may be the same as or different from each other.

$R^{52}$ in the formula (J1) is preferably a methyl group, an ethyl group, a propyl group, a butyl group, or a phenyl group, more preferably a methyl group, an ethyl group, a propyl group, or a butyl group, and still more preferably a methyl

group.

$R^{53}$ in the formula (J1) represents a divalent hydrocarbon group having 1 to 20 carbon atoms, in which a group having a hetero atom may intervene. Examples of the divalent hydrocarbon group having 1 to 20 carbon atoms represented by $R^{53}$ include the groups exemplified for $R^{33}$ in the formula (D1) that have the corresponding number of carbon atoms. Of these, an alkylene group having 3 to 11 carbon atoms is preferred.

Examples of the group having a hetero atom similarly include the groups exemplified for $R^{33}$ in the formula (D1). Of these, a $-NR^a-$ group is preferred, and a -NH- group is more preferred. One kind or two or more kinds of the group having a hetero atom represented by $R^{53}$ may be contained, and in the case where there are plural groups having a hetero atom, the groups may be the same as or different from each other.

In the formula (J1), Z represents a polar group. The polar group is preferably an amino group, an iminoalkyl group ($-CR^c=NH$, wherein $R^c$ represents a hydrogen atom or a monovalent hydrocarbon group having 1 to 10 carbon atoms), a glycidoxy group, an isocyanate group, a thiol group, a hydrosilyl group, or a (meth)acryloyloxy group, and more preferably an amino group. The amino group represented by Z in the formula (J1) may be any of a primary amino group, a secondary amino group, and a tertiary amino group, and above all, a primary amino group is preferred.

In the formula (J1), w represents an integer of 2 or 3, and preferably 3.

Examples of the silane coupling agent (J) include 3-(2-aminoethylamino)propyltrimethoxysilane, 3-aminopropyltrimethoxysilane, 3-aminopropyltriethoxysilane, 3-(2-(2-aminoethylamino)ethylamino)propyltrimethoxysilane, 3-glycidoxypropyltrimethoxysilane, 3-isocyanatopropyltrimethoxysilane, 3-mercaptopropyltrimethoxysilane, and N-phenyl-3-aminopropyltrimethoxysilane.

The silane coupling agent (J) may be a partially hydrolyzed condensate of the compound represented by the formula (J1). The silane coupling agent (J) may be used alone or in combination of two or more thereof.

In the case where the antifouling coating composition of the present invention contains the silane coupling agent (J), from the viewpoint of improving the adhesion of the antifouling coating film to the substrate or the underlying coating film, the content of the silane coupling agent (J) in the solid content of the coating composition is preferably 0.01% by mass or more, and more preferably 0.05% by mass or more, and it is preferably 10% by mass or less, and more preferably 2% by mass or less.

[Anti-sagging and Anti-settling Agent (K)]

The antifouling coating composition of the present invention may contain an anti-sagging and anti-settling agent (K).

Examples of the anti-sagging and anti-settling agent (K) include an organoclay-based wax (such as a stearate salt, a lecithin salt, and an alkyl sulfonate of Al, Ca, or Zn), an organic wax (such as a polyethylene wax, an oxidized polyethylene wax, an amide wax, a polyamide wax, and a hydrogenated castor oil wax), and a mixture of an organoclay-based wax and an organic wax.

As the anti-sagging and anti-settling agent (K), a commercially available product can be used. Examples of the commercially available product include "Disparlon 305", "Disparlon 4200-20", and "Disparlon A630-20X", all of which are manufactured by Kusumoto Chemicals, Ltd.

In the case where the antifouling coating composition of the present invention contains the anti-sagging and anti-settling agent (K), the content of the anti-sagging and anti-settling agent (K) in the solid content of the coating composition is preferably 0.01% by mass or more, and more preferably 0.1% by mass or more, and it is preferably 10% by mass or less, and more preferably 3% by mass or less.

[Enzyme (L)]

The antifouling coating composition of the present invention may contain an enzyme (L) for the purpose of improving the antifouling performance of the antifouling coating film.

Examples of the enzyme (L) include serine protease, cysteine protease, metalloproteinase, cellulase, hemicellulase, pectinase, and glycosidase.

In the case where the antifouling coating composition of the present invention contains the enzyme (L), the content of the enzyme (L) in the solid content of the coating composition is preferably 0.0005% by mass or more, and more preferably 0.01% by mass or more, and it is preferably 5% by mass or less, and more preferably 0.1% by mass or less.

<Kit for Preparing Coating Composition>

Typically, the antifouling coating composition of the present invention is provided as a multi-pack type coating material composed of two or more components.

These respective components (respective liquids) each contain one or more ingredients, are individually packed,

and then stored and kept in a state of being charged in a container, such as a can. When the contents of the respective components are mixed at the time of coating, the coating composition is prepared. That is, in one aspect, the present invention is to provide a kit composed of components as mentioned above for preparing the antifouling coating composition according to the present invention.

In the organopolysiloxane-based antifouling coating composition, in general, a component containing the organopolysiloxane constituting a main material of the binder resin of the antifouling coating composition is referred to as a "base agent"; a component containing a compound which crosslinks this organopolysiloxane through reaction therewith is referred to as a "curing agent"; and a component containing a compound which reacts any compounds contained in the base agent component and the curing agent component, such as a coupling agent, is referred to as an "additive".

One form of the kit for preparing the antifouling coating composition according to the present invention is in a multi-pack type form individually having a base agent component (X) containing the curable organopolysiloxane (A) and a curing agent component (Y) containing the organosilicon crosslinking agent (B) and the curing catalyst (C).

One form of the kit for preparing the antifouling coating composition according to the present invention is in a multi-pack type form individually having a base agent component (X) containing the curable organopolysiloxane (A), a curing agent component (Y) containing the organosilicon crosslinking agent (B), and an additive component(Z). In this form, the curing catalyst (C) is contained in at least one component selected from the group consisting of the curing agent component (Y) and the additive component(Z).

The base agent component (X) in the present invention contains the curable organopolysiloxane (A), and preferably further contains other optional ingredient. As mentioned above, the curable organopolysiloxane (A) to be blended in the base agent component (X) may be a heat-treated material with silica, in which a part or the whole thereof is the inorganic filler (F), or a kneaded material obtained by blending the curable organopolysiloxane (A) and silica. Examples of the optional ingredient which can be blended in the base agent component (X) include the silicone oil (D) represented by a phenyl-modified polydimethylsiloxane and an ether-modified polydimethylsiloxane, the ether group-containing polymer (E), the inorganic filler (F), the coloring pigment (G), the organic solvent (H), the antifouling agent (I) represented by a pyrithione salt, the anti-sagging and anti-settling agent (K), and the enzyme (L).

The curing agent component (Y) in the present invention preferably contains the organosilicon crosslinking agent (B) represented by tetraethyl orthosilicate and an optional ingredient having high reactivity with the ingredient contained in the base agent. Examples of the optional ingredient which can be blended in the curing agent component (Y) include the curing catalyst (C), the silicone oil (D) represented by a phenyl-modified polydimethylsiloxane and an ether-modified polydimethylsiloxane, the organic solvent (H), and the anti-sagging and anti-settling agent (K). The silicone oil (D) and the anti-sagging and anti-settling agent (K) may be blended in any of the components so far as they do not cause undesired reaction with the other ingredients of the base agent component (X) and the curing agent component (Y).

The additive component (Z) in the present invention preferably further contains an optional ingredient having high reactivity with the ingredients contained in the base agent component (X) and the curing agent component (Y). Examples of the optional ingredient which can be blended in the additive component (Z) include the curing catalyst (C) and the silane coupling agent (J).

Although a method for preparing the antifouling coating composition according to the present invention is not particularly restricted, for example, the antifouling coating composition is obtained by adding the respective ingredients constituting the multi-pack type antifouling coating material, namely the aforementioned respective components of the kit (the contents of the package) and optionally, additional optional ingredients successively or simultaneously according to the common method and then mixing them.

[Antifouling Coating Film]

The antifouling coating film of the present invention is formed of the antifouling coating composition of the present invention and is one obtained by curing the antifouling coating composition. Specifically, for example, the antifouling coating film can be formed by applying the antifouling coating composition of the present invention on a substrate or the like and then drying.

Examples of the method for applying the antifouling coating composition of the present invention include known methods using a brush, a roller, a spray, or the like.

The antifouling coating film can be formed by drying the antifouling coating composition applied by the aforementioned method, for example, under a condition at 25°C for about 0.5 to 7 days. In addition, the antifouling coating composition of the present invention exhibits rapid curability even in a low-temperature environment, and the antifouling coating film can be formed by drying, for example, under a condition at 5°C for about 0.5 to 7 days. The drying of the antifouling coating composition may be performed while blowing the air under heating.

A thickness of the antifouling coating film of the present invention after curing is, for example, preferably about 100 to 2,000 pm from the viewpoint of improving the strength of the coating film. Examples of the method for producing the antifouling coating film having this thickness include a method for applying the coating composition once or multiple

times to a thickness per one time application of preferably 30 to 400 pm, and more preferably 50 to 300 pm.

[Substrate with Antifouling Coating Film and Method for Producing Same]

The substrate with an antifouling coating film according to the present invention is one including the antifouling coating film of the present invention on a substrate.

Although a method for producing the substrate with an antifouling coating film of the present invention is not particularly limited, examples thereof include a method including the following steps (1) and (2) and a method including the following steps (i) and (ii).

The substrate with an antifouling coating film of the present invention can be produced by a method including a step (1) of applying or impregnating a substrate with the antifouling coating composition of the present invention, to obtain an applied material or an impregnated material; and a step (2) of curing the coating composition applied or impregnated on the substrate obtained in the step (1), to form a coating film.

In the step (1), as for the method for applying the coating composition on the substrate, the aforementioned application method can be adopted. In addition, the method for performing the impregnation is not particularly restricted and can be performed by immersing the substrate in the coating composition in a sufficient amount for achieving the impregnation. Furthermore, the method for curing the applied or impregnated coating composition is not particularly restricted, and the coating composition can be cured in the same method as that in producing the antifouling coating film.

The substrate with an antifouling coating film of the present invention can be produced by a method including a step (i) of curing the antifouling coating composition of the present invention, to form a coating film; and a step (ii) of adhering the coating film obtained in the step (i) onto a substrate.

In the step (i), the method for forming a coating film is not particularly restricted, and the coating film can be produced in the same method as that in producing the coating film.

In the step (ii), the method for adhering the coating film onto a substrate is not particularly restricted, and for example, the coating film can be stuck onto the substrate by using a pressure-sensitive adhesive tape having a layer composed of an antifouling coating film as in the method described in JP 2013-129724 A.

Examples of the substrate include a ship (such as an outside shell of a ship's hull of a large scale steel-hulled ship, such as a container ship and a tanker, a fishing boat, an FRP boat, a wooden vessel, and a yacht; and a newly built ship and a repaired ship thereof, a fishing material (such as a rope, a fishing net, a fishing gear, a float, and a buoy), a petroleum pipeline, a water conduit, a water circulation pipe, a diver suit, a swimming goggle, an oxygen cylinder, a swim suit, a torpedo, an underwater structure, such as a feed-water and drainage port for a heat power or nuclear power plant, a marine cable, a seawater utilization equipment (such as a seawater pump), a mega-float, a coastal road, an undersea tunnel, seaport equipment, and various marine civil engineering works for a canal, a water channel, or the like.

Of these, the substrate is preferably a ship, an underwater structure, or a fishing gear, more preferably a ship or an underwater structure, and still more preferably a ship.

<Antifouling Method Using Antifouling Coating Film>

Although an antifouling method using the antifouling coating film of the present invention is not particularly limited, examples thereof include a method for covering an object (substrate) to be prevented from occurrence of attachment of aquatic organisms with the antifouling coating film of the present invention or a laminated antifouling coating film.

The laminated antifouling coating film preferably has the antifouling coating film of the present invention on an anticorrosion coating film. Examples of the anticorrosion coating film include an anticorrosion coating film of a reaction curing type resin system and an anticorrosion coating film of a thermoplastic resin system, and from the viewpoint of adhesive properties, an anticorrosion coating film of a reaction curing type resin system is preferred. Specifically, examples of the reaction curing type resin include a silicone resin, an epoxy resin, and a urethane resin.

The laminated antifouling coating film may further have at least one antifouling coating film selected from the group consisting of the antifouling coating film of the present invention and other silicone resin-based antifouling coating film on the antifouling coating film of the present invention.

The antifouling coating film of the present invention is excellent in antifouling performance and is able to suppress fouling with aquatic organisms of a substrate covered with the coating film.

EXAMPLES

The present invention is hereunder described more specifically on the basis of Examples, but it should be construed that the present invention is not limited to these Examples.

[Evaluation Method of Physical Properties]

<Solid Content (% by mass)>

The solid content of each of the solution of the curing catalyst (C), the solution of the ether group-containing polymer (E), and the antifouling coating composition was calculated according to the following method.
1.0 g (X1) of a sample was retained in a thermostat chamber kept under a condition at 1 atm and 125°C for 1 hour, and a volatile component was removed to obtain a non-volatile component. The amount (X2 (g)) of this non-volatile component was measured, and a content ratio (% by mass) of the solid content contained in the sample was calculated according to the following expression.

$$\text{Solid content (\% by mass)} = (X2/X1) \times 100$$

<Viscosity of Solution of Ether Group-Containing Polymer (E)>

The viscosity (unit: mPa·s) of the solution of the ether group-containing polymer (E) at a liquid temperature of 25°C was measured with an E-type viscometer (TV-25, manufactured by Toki Sangyo Co., Ltd.).

<Weight Average Molecular Weight (Mw)>

The weight average molecular weight (Mw) of each of the ether group-containing polymer (E) and the curable organopolysiloxane (A) was measured by means of GPC (gel permeation chromatography) under the following condition.

GPC Condition

Equipment: "HLC-8220GPC" (manufactured by Tosoh Corporation)
Columns: "TSK gel Super H2000" and "TSK gel Super H4000" connected with each other (all of which are manufactured by Tosoh Corporation, 6 mm in inside diameter/15 cm in length)
Eluent: Tetrahydrofuran (THF)
Flow rate: 0.500 mL/min
Detector: RI
Column thermostat chamber temperature: 40°C
Standard substance: Polystyrene
Preparation method of sample: The solution of the ether group-containing polymer (E) of Production Example 1 or the curable organopolysiloxane (A) was diluted by the addition of THF and then filtered with a membrane filter. The obtained filtrate was designated as a sample for the GPC measurement.

<Identification of Kinds and Measurement of Contents of Various Metal Elements in Curing Catalyst>

The curing catalyst was subjected to composition analysis by the ICP atomic emission spectroscopy under the following condition, to determine the contents of metals in the curing catalyst.
The measurement was performed using a testing instrument "SPECTRO CIROS-120 (EOP)" (manufactured by Rigaku Corporation) by the method prescribed in JIS K0116:2014.
As the pretreatment of the sample, 1 g of the curing catalyst was weighed in a polypropylene-made digestion tube "DigiTUBEs" (manufactured by GL Sciences Inc.), 25 mL of nitric acid (1+1) was added, and heat decomposition with a block heater was performed. After allowing to stand for cooling, the resultant was made up to 50 mL with distilled water, to prepare a test liquid A.
The obtained test liquid A was diluted in an optional rate with distilled water, and the amount of the metal in the sample was measured with an ICP atomic emission spectrometer. A calibration curve was prepared by using samples having known amounts of remaining metal ions at four points of 0 ppm, 1 ppm, 2 ppm, and 4 ppm. In addition, as for a measurement wavelength of the emission spectrum of each metal, 202.548 nm for zinc, 223.061 nm for bismuth, 257.139 nm for zirconium, 259.941 nm for iron, 455.404 nm for barium, 407.771 nm for strontium, 670.780 nm for lithium, 589.592 nm for sodium, and 766.941 nm for potassium were adopted, respectively.

[Production of Solution of Ether Group-Containing Polymer (E)]

<Production Example 1>

The reaction was performed at an atmospheric pressure in a nitrogen atmosphere. 42.86 g of methyl amyl ketone was charged in a reaction vessel equipped with a stirrer, a reflux condenser, a thermometer, a nitrogen introducing tube, and a dropping funnel and heated to an internal temperature of 100°C while stirring. While keeping the temperature of the methyl amyl ketone in the reaction vessel within a range of 100±5°C, a monomer mixture composed of 20 g of NK Ester AM-90G (methoxypolyethylene glycol #400 acrylate, manufactured by Shin-Nakamura Chemical Co., Ltd.), 80 g of isobutyl acrylate, and 4 g of 2,2'-azobis(2-methylbutyronitrile) was added dropwise in the reaction vessel over 4 hours. Thereafter, the reaction mixture was stirred for 2 hours while keeping the foregoing temperature range, to obtain a solution of the ether group-containing polymer (E). The various physical properties of the ether group-containing polymer (E) were measured, and the results are shown in Table 1.

Table 1

| Production of solution of ether group-containing polymer (E) | | | Production Example |
|---|---|---|---|
| | | | 1 |
| Monomer mixture (parts by mass) | Unsaturated monomer (e1) | NK Ester AM-90G (*1) | 20.0 |
| | Other unsaturated monomer (e2) | Isobutyl acrylate | 80.0 |
| | Total | | 100.0 |
| Characteristics | Solid content (% by mass) (*2) | | 69.5 |
| | Viscosity (mPa·s) | | 180 |
| | Weight average molecular weight (Mw) | | 11,800 |
| * 1: Methoxypolyethylene glycol acrylate repeating number of polyethylene glycol = 9 in average), manufactured by Shin-Nakamura Chemical Co., Ltd.<br>*2: Volatile component: Methyl amyl ketone | | | |

[Production of Curing Catalyst (C)/Lithium Versatate Solution]

<Production Example 2>

The reaction was performed at an atmospheric pressure in a nitrogen atmosphere. 57.33 g of versatic acid, 15.4 g of lithium hydroxide monohydrate, and 28.49 g of butyl cellosolve were charged in a reaction vessel equipped with a stirrer, a reflux condenser, a thermometer, and a nitrogen introducing tube and heated to an internal temperature of 80°C while stirring. While keeping the temperature of the versatic acid in the reaction vessel within a range of 80±5°C, the reaction mixture was stirred for 3 hours, to obtain a lithium versatate solution (solid content: 60% by mass).

[Production of Curing Catalyst (C)/Sodium Versatate Solution]

<Production Example 3>

The reaction was performed at an atmospheric pressure in a nitrogen atmosphere. 34.6 g of versatic acid, 8.0 g of sodium hydroxide, and 35.4 g of ethanol were charged in a reaction vessel equipped with a stirrer, a reflux condenser, a thermometer, and a nitrogen introducing tube and heated to an internal temperature of 50°C while stirring. While keeping the temperature of the versatic acid in the reaction vessel within a range of 50±5°C, the reaction mixture was stirred for 3 hours, to obtain a sodium versatate solution (solid content: 50% by mass).

[Production of Curing Catalyst (C)/Potassium Versatate Solution]

<Production Example 4>

The reaction was performed at an atmospheric pressure in a nitrogen atmosphere. 34.6 g of versatic acid,

11.22 g of potassium hydroxide, and 38.62 g of ethanol were charged in a reaction vessel equipped with a stirrer, a reflux condenser, a thermometer, and a nitrogen introducing tube and heated to an internal temperature of 50°C while stirring. While keeping the temperature of the versatic acid in the reaction vessel within a range of 50±5°C, the reaction mixture was stirred for 3 hours, to obtain a potassium versatate solution (solid content: 50% by mass).

[Coating Composition]

· Blending Ingredients

The blending ingredients to be used for the coating compositions are shown in Tables 2 and 3.

A kneaded material of the curable organopolysiloxane (A) and the inorganic filler (silica) (F) shown in Table 2 is one obtained by using the curable organopolysiloxane (A) and silica as the inorganic filler (F) in amounts shown in Table 2 and kneading by a known method.

Table 2

| | Compound name | Chemical formula, characteristics, and manufacturer, etc. |
|---|---|---|
| Curable organopolysiloxane (A) | Silanol group-containing organopolysiloxane | $HO-[Si(CH_3)_2-O-]_n-H$ |
| | | Weight average molecular weight = 28,500, viscosity: 2,100 mPa s |
| Inorganic filler (F) | Hydrophobized silica | "AEROSIL RX200", manufactured by Nippon Aerosil Co., Ltd. |
| Kneaded material (1) of (A) and (F) | Kneaded product of silanol group-containing organopolysiloxane and hydrophobized silica Amount of the compound (F) based on 100 parts by mass of the component (A) = 10 parts by mass, viscosity = 5,000 mPa s | |
| Organosilicon crosslinking agent (B) | Partially hydrolyzed condensate of organosilane | "WACKER SILICATE TES 40 WN", manufactured by Asahi Kasei Wacker Silicone Co., Ltd. $H_5C_2O-[Si(OC_2H_5)_2-O-]t-C_2H_5$ |
| Silicone oil (D) | Ether-modified polydimethylsiloxane | "KF-6020", manufactured by Shin-Etsu Chemical Co., Ltd. |
| | Phenyl-modified polydimethylsiloxane | "KF-50-1,000cs", manufactured by Shin-Etsu Chemical Co., Ltd., phenyl modification rate: 5%, viscosity = 1,000 mPa·s |
| Antifouling agent (I) | Copper pyrithione | "Copper Omadine Powder", manufactured by Arch UK Biocides Ltd. $Cu(-S-C_5H_4N-O-)_2$ |
| Coloring pigment (G) | Titanium oxide | - |
| Organic solvent (H) | Xylene | - |
| | 1-Butanol | - |
| | Ethanol | - |

Table 3

| | Compound name | Main metal | Non-volatile component (%) | Production Example No. Name of manufacturer and product |
|---|---|---|---|---|
| Curing catalyst (C) | Lithium versatate | Li | 60 | Production Example 2 |
| | Sodium versatate | Na | 50 | Production Example 3 |
| | Potassium versatate | K | 50 | Production Example 4 |
| | Lithium naphthenate | Li | 50 | "Lithium Naphthenate 50%", manufactured by Toei Chemical Industry Co., Ltd. |
| | Long-chain carboxylic acid metal salt *1 | Li, Zn | 67 | "K-KAT XK-618", manufactured by Kind Industries, Inc. |
| | Long-chain carboxylic acid metal salt *1 | Li, Zn | 61 | "K-KAT XK-624", manufactured by Kind Industries, Inc. |
| | Long-chain carboxylic acid metal salt *1 | Li | 65 | "Borchers Deca Lithium 2", manufactured by OMG Borchers GmbH |
| Curing catalyst other than (C) | Long-chain carboxylic acid metal salt | Zn, Bi, Zr | 79 | "K-KAT XK-627", manufactured by Kind Industries, Inc. |
| | Long-chain carboxylic acid metal salt | Bi, Zn | 56 | "Borchi Kat 0244", manufactured by OMG Borchers GmbH |
| | Long-chain carboxylic acid metal salt | Ba | 45 | "Octa-Soligen Barium 12.5", manufactured by OMG Borchers GmbH |
| | Long-chain carboxylic acid metal salt | Fe | 55 | "Octa-Soligen Iron 7/8", manufactured by OMG Borchers GmbH |
| | Long-chain carboxylic acid metal salt | Zr | 65 | "Octasoligen Zirconium 24", manufactured by OMG Borchers GmbH |
| | Long-chain carboxylic acid metal salt | Zn | 61 | "K-KAT XK-635", manufactured by Kind Industries, Inc. |
| | Long-chain carboxylic acid metal salt | Sr | 45 | "Octa-Soligen Strontium 10", manufactured by OMG Borchers GmbH |
| *1: The carboxylic acid in the curing catalyst (C) contains an isomer mixture of saturated monocarboxylic acids having 10 carbon atoms | | | | |

<Examples 1 to 13 and Comparative Examples 1 to 7: Production of Antifouling Coating Composition>

By stirring and mixing according to the blending amounts (parts by mass) described in Tables 4 and 5, two-pack type coating compositions composed of the base agent component (X) and the curing agent component (Y) were prepared. On the occasion of applying the two-pack type coating composition onto the substrate, the coating composition prepared by thoroughly stirring and mixing the base agent component (X) and the curing agent component (Y) by using a disperser such that it became uniform was used.

<Physical Property Testing of Antifouling Coating Composition and Antifouling Coating Film>

(Curability)

The test was performed by the method prescribed in ISO 9117-424, and RC Type Coating Film Drying Time Measuring Instrument Type I (Drying Time Recorder), manufactured by TP Giken Co., Ltd. was used as a testing instrument. Each of the antifouling coating compositions of the Examples and Comparative Examples was applied on a rectangular glass plate of 300 mm × 25 mm by using a 0.5 mm applicator; then, a tip of a needle was placed thereon; the needle was allowed to linearly run at an optional speed on the glass plate; and a curing stage (curing time) was

measured to evaluate the curability. The measurement was performed in a constant-temperature and constant-humidity chamber (at 23°C and 50% RH) and a low-temperature testing chamber (at 5°C and 30% RH). Although a mark of the needle is seen on the surface of the coating film at the initial stage of curing of the coating, when the coating is cured to a certain extent, the mark of the needle is not seen.

The curing time of the antifouling coating composition was defined as a time from the application of the antifouling coating composition on a glass plate until the mark of the needle was not seen (unit:hour).

(Pot Life)

After preparation of an antifouling coating composition through mixing of the base agent component (X) and the curing agent component (Y) of the antifouling coating composition, the viscosity of the coating composition increases with time owing to reaction of the ingredients in the coating composition with each other. The coating workability is lowered owing to thickening of the coating composition. The time for which this coating workability falls within a tolerable range is generally referred to as a pot life (practical pot life).

The evaluation of the working life of the antifouling coating composition was performed as follows.

That is, immediately after preparing each of the antifouling coating compositions of Examples 9 to 13 under a condition at 23°C and 50% RH, the viscosity of the coating composition was measured (initial viscosity); thereafter, the viscosity of the coating composition was measured at intervals of every 30 minutes; values of viscosity changes with time were connected with a straight line on a graph; the time until the viscosity exceeded 2 times of the initial viscosity was determined at intervals of every 10 minutes; and a time (unit: minute) until just before the viscosity exceeded 2 times of the initial viscosity was defined as the working life of the antifouling coating composition.

The viscosity was measured with a B-type viscometer (Model: BM, manufactured by Tokyo Keiki, Inc.) under a condition at a rotation rate of 60 rpm. When the thus measured working life is 60 minutes or more, it may be said that the working life of the antifouling coating composition is good.

(Antifouling Performance)

<Fabrication of Test Panel with Coating Film>

On a sand-blasted panel having an epoxy-based anticorrosion paint ("BANNOH 500", manufactured by Chugoku Marine Paints, Ltd.) applied thereon, a silicone-based binder coat (CMP BIOCLEAN TIE COAT, manufactured by Chugoku Marine Paints, Ltd.) was applied to a thickness after drying (curing) of 100 pm and then dried at 5°C for 5 hours, to form an underlying coating film.

Subsequently, each of the antifouling coating compositions of the Examples and Comparative Examples was applied on this underlying coating film to a thickness after drying (curing) of 200 pm at 5°C. After allowing to stand for one week at 5°C, the test panel with a coating film was provided.

<Test of Antifouling Performance>

The test panel was stationarily immersed in the Bay of Miyajima, Hiroshima Prefecture. After 3 months, a ratio of the attachment area of aquatic organisms including slimes occupying on the surface of the test panel was evaluated by visual observation. The antifouling performance was evaluated by the following evaluation point.

(Evaluation Point)

5: The attachment area of aquatic organisms is less than 1% of the entire test surface.
4: The attachment area of aquatic organisms is 1% or more and less than 10% of the entire test surface.
3: The attachment area of aquatic organisms is 10% or more and less than 30% of the entire test surface.
2: The attachment area of aquatic organisms is 30% or more and less than 60% of the entire test surface.
1: The attachment area of aquatic organisms is 60% or more of the entire test surface.

Table 4(1/2)

| Component and ingredient of two-pack type coating composition (unit: parts by mass) | | | Example | | | | | | | | |
|---|---|---|---|---|---|---|---|---|---|---|---|
| | | | 1 | 2 | 3 | 4 | 5 | 6 | 7 | 8 | 9 |
| Base agent (X) | (A) | Silanol group-containing organopolysiloxane | 30.0 | 30.0 | 30.0 | 30.0 | 30.0 | 30.0 | 30.0 | 30.0 | 30.0 |
| | (A) and (F) | Silanol group-containing organopolysiloxane/ hydrophobized silica kneaded material (1) | 25.0 | 25.0 | 25.0 | 25.0 | 25.0 | 25.0 | 25.0 | 25.0 | 25.0 |
| | (E) | Ether-containing polymer (E) (solid content: 69.5% by mass) | 1.0 | 1.0 | 1.0 | 1.0 | 1.0 | 1.0 | 1.0 | 1.0 | 1.0 |
| | (G) | Titanium oxide | 5.0 | 5.0 | 5.0 | 5.0 | 5.0 | 5.0 | 5.0 | 5.0 | 5.0 |
| | (H) | Xylene | 9.0 | 9.0 | 9.0 | 9.0 | 9.0 | 9.0 | 9.0 | 9.0 | 4.0 |
| | (I) | Copper pyrithione | | | | | | | | | 5.0 |
| | Subtotal of base agent (X) | | 70.0 | 70.0 | 70.0 | 70.0 | 70.0 | 70.0 | 70.0 | 70.0 | 70.0 |

(continued)

| Component and ingredient of two-pack type coating composition (unit: parts by mass) | | | Example | | | | | | | | |
|---|---|---|---|---|---|---|---|---|---|---|---|
| | | | 1 | 2 | 3 | 4 | 5 | 6 | 7 | 8 | 9 |
| Curing agent (Y) | (D) | Ether-modified polydimethylsiloxane | 0.5 | 0.5 | 0.5 | 0.5 | 0.5 | 0.5 | 0.5 | 0.5 | 0.5 |
| | | Phenyl-modified polydimethylsiloxane | 7.0 | 7.0 | 7.0 | 7.0 | 7.0 | 7.0 | 7.0 | 7.0 | 7.0 |
| | (B) | Organosilane partially hydrolyzed condensate | 3.0 | 3.0 | 3.0 | 3.0 | 3.0 | 3.0 | 3.0 | 3.0 | 3.0 |
| | (C) | Lithium versatate solution (Li) (solid content: 60% by mass) | 2.0 | | | | | | | | |
| | | Sodium versatate solution (Na) (solid content: 50% by mass) | | 1.0 | | | | | | | |
| | | Potassium versatate solution (K) (solid content: 50% by mass) | | | 0.5 | | | | | | |
| | | Lithium naphthenate 50% (Li) | | | | 4.0 | | | | | |
| | | K-KAT XK-618 (Li, Zn) | | | | | 0.6 | 2.0 | | | 2.0 |
| | | K-KAT XK-624 (Li, Zn) | | | | | | | 2.0 | | |
| | | Borchers Deca Lithium 2 (Li) | | | | | | | | 2.0 | |
| | Curing catalyst other than (C) | K-KAT XK-627 (Zn, Bi, Zr) | | | | | | | | | |
| | | Borchi Kat 0244 (Bi, Zn) | | | | | | | | | |
| | | Octa-Soligen Barium 12.5 (Ba) | | | | | | | | | |
| | | Octa-Soligen Iron 7/8 (Fe) | | | | | | | | | |
| | | Octasoligen Zirconium 24 (Zr) | | | | | | | | | |
| | | K-KAT XK-635 (Zn) | | | | | | | | | |
| | | Octa-Soligen Strontium 10 (Sr) | | | | | | | | | |
| | (H) | Xylene | 17.5 | 18.5 | 19.0 | 15.5 | 18.9 | 17.5 | 17.5 | 17.5 | 17.5 |
| | Subtotal of curing agent (Y) | | 30.0 | 30.0 | 30.0 | 30.0 | 30.0 | 30.0 | 30.0 | 30.0 | 30.0 |
| Total of base agent (X) and curing agent (Y) | | | 100 | 100 | 100 | 100 | 100 | 100 | 100 | 100 | 100 |

(continued)

| Component and ingredient of two-pack type coating composition (unit: parts by mass) | | Example | | | | | | | | |
|---|---|---|---|---|---|---|---|---|---|---|
| | | 1 | 2 | 3 | 4 | 5 | 6 | 7 | 8 | 9 |
| Curing catalyst | Amount of active ingredient in coating composition | 1.20 | 0.50 | 0.25 | 2.00 | 0.40 | 1.34 | 1.22 | 1.30 | 1.34 |
| | Amount of Li in coating composition (mg/kg) | 488 | - | - | 460 | 140 | 466 | 396 | 448 | 466 |
| | Amount of Na in coating composition (mg/kg) | | 593 | - | - | - | - | - | - | - |
| | Amount of K in coating composition (mg/kg) | - | - | 520 | - | - | - | - | - | - |
| | Amount of Zn in coating composition (mg/kg) | - | - | - | - | 15 | 50 | 52 | - | 50 |
| | Amount of Bi in coating composition (mg/kg) | - | - | - | - | - | - | - | - | - |
| | Amount of Zr in coating composition (mg/kg) | - | - | - | - | - | - | - | - | - |
| | Amount of other metal in coating composition (mg/kg) | - | - | - | - | - | - | - | - | - |
| | Amount of alkali metal relative to total amount of metal in catalyst (% by mass) | 100 | 100 | 100 | 100 | 90 | 90 | 88 | 100 | 90 |
| Evaluation of physical properties | Curability at 23°C and 50% RH (hour) | 2 | 5 | 4 | 2 | 2.5 | 1 | 1.5 | 1.5 | 1 |
| | Curability at 5°C and 30% RH (hour) | 8.5 | 12 | 11 | 13 | 8 | 3 | 4 | 6 | 3 |
| | Antifouling performance | 4 | 3 | 3 | 4 | 4 | 5 | 5 | 4 | 5 |

Table 4(2/2)

| Component and ingredient of two-pack type coating composition (unit: parts by mass) | | | Comparative Example | | | | | | |
|---|---|---|---|---|---|---|---|---|---|
| | | | 1 | 2 | 3 | 4 | 5 | 6 | 7 |
| Base agent (X) | (A) | Silanol group-containing organopolysiloxane | 30.0 | 30.0 | 30.0 | 30.0 | 30.0 | 30.0 | 30.0 |
| | (A) and (F) | Silanol group-containing organopolysiloxane/ hydrophobized silica kneaded material (1) | 25.0 | 25.0 | 25.0 | 25.0 | 25.0 | 25.0 | 25.0 |
| | (E) | Ether-containing polymer (E) (solid content: 69.5% by mass) | 1.0 | 1.0 | 1.0 | 1.0 | 1.0 | 1.0 | 1.0 |
| | (G) | Titanium oxide | 5.0 | 5.0 | 5.0 | 5.0 | 5.0 | 5.0 | 5.0 |
| | (H) | Xylene | 9.0 | 9.0 | 9.0 | 9.0 | 9.0 | 9.0 | 9.0 |
| | (I) | Copper pyrithione | | | | | | | |
| | Subtotal of base agent (X) | | 70.0 | 70.0 | 70.0 | 70.0 | 70.0 | 70.0 | 70.0 |

(continued)

| Component and ingredient of two-pack type coating composition (unit: parts by mass) | | | Comparative Example | | | | | | |
|---|---|---|---|---|---|---|---|---|---|
| | | | 1 | 2 | 3 | 4 | 5 | 6 | 7 |
| Curing agent (Y) | (D) | Ether-modified polydimethylsiloxane | 0.5 | 0.5 | 0.5 | 0.5 | 0.5 | 0.5 | 0.5 |
| | | Phenyl-modified polydimethylsiloxane | 7.0 | 7.0 | 7.0 | 7.0 | 7.0 | 7.0 | 7.0 |
| | (B) | Organosilane partially hydrolyzed condensate | 3.0 | 3.0 | 3.0 | 3.0 | 3.0 | 3.0 | 3.0 |
| | (C) | Lithium versatate solution (Li) (solid content: 60% by mass) | | | | | | | |
| | | Sodium versatate solution (Na) (solid content: 50% by mass) | | | | | | | |
| | | Potassium versatate solution (K) (solid content: 50% by mass) | | | | | | | |
| | | Lithium naphthenate 50% (Li) | | | | | | | |
| | | K-KAT XK-618 (Li, Zn) | | | | | | | |
| | | K-KAT XK-624 (Li, Zn) | | | | | | | |
| | | Borchers Deca Lithium 2 (Li) | | | | | | | |
| | Curing catalyst other than (C) | K-KAT XK-627 (Zn, Bi, Zr) | 2.0 | | | | | | |
| | | Borchi Kat 0244 (Bi, Zn) | | 2.0 | | | | | |
| | | Octa-Soligen Barium 12.5 (Ba) | | | 2.0 | | | | |
| | | Octa-Soligen Iron 7/8 (Fe) | | | | 2.0 | | | |
| | | Octasoligen Zirconium 24 (Zr) | | | | | 2.0 | | |
| | | K-KAT XK-635 (Zn) | | | | | | 2.0 | |
| | | Octa-Soligen Strontium 10 (Sr) | | | | | | | 2.0 |
| | (H) | Xylene | 17.5 | 17.5 | 17.5 | 17.5 | 17.5 | 17.5 | 17.5 |
| | Subtotal of curing agent (Y) | | 30.0 | 30.0 | 30.0 | 30.0 | 30.0 | 30.0 | 30.0 |
| Total of base agent (X) and curing agent (Y) | | | 100 | 100 | 100 | 100 | 100 | 100 | 100 |

(continued)

| Component and ingredient of two-pack type coating composition (unit: parts by mass) | | Comparative Example | | | | | | |
|---|---|---|---|---|---|---|---|---|
| | | 1 | 2 | 3 | 4 | 5 | 6 | 7 |
| Curing catalyst | Amount of active ingredient in coating composition | 1.58 | 1.12 | 0.90 | 1.10 | 1.30 | 1.20 | 0.90 |
| | Amount of Li in coating composition (mg/kg) | - | - | - | - | - | - | - |
| | Amount of Na in coating composition (mg/kg) | - | - | - | - | - | - | - |
| | Amount of K in coating composition (mg/kg) | - | - | - | - | - | - | - |
| | Amount of Zn in coating composition (mg/kg) | 2804 | - | - | - | - | 3460 | - |
| | Amount of Bi in coating composition (mg/kg) | 652 | 4560 | - | - | - | - | - |
| | Amount of Zr in coating composition (mg/kg) | 210 | 672 | - | - | 5060 | - | - |
| | Amount of other metal in coating composition (mg/kg) | - | - | 2520 | 1620 | - | - | 2120 |
| | Amount of alkali metal relative to total amount of metal in catalyst (% by mass) | - | - | - | - | - | - | - |
| Evaluation of physical properties | Curability at 23°C and 50% RH (hour) | 13 | 2 | 13 | 12 | 30 | 48< | 48< |
| | Curability at 5°C and 30% RH (hour) | 34 | 18 | 48< | 48< | 48< | 48< | 48< |
| | Antifouling performance | 1 | 2 | 1 | 1 | 1 | 1 | 1 |

Table 5

| Component and ingredient of two-pack type coating composition (unit: parts by mass) | | | Example | | | | |
|---|---|---|---|---|---|---|---|
| | | | 9 | 10 | 11 | 12 | 13 |
| Base agent (X) | (A) | Silanol group-containing organopolysiloxane | 30.0 | 30.0 | 30.0 | 30.0 | 30.0 |
| | (A) and (F) | Silanol group-containing organopolysiloxane/ hydrophobized silica kneaded material (1) | 25.0 | 25.0 | 25.0 | 25.0 | 25.0 |
| | (E) | Ether-containing polymer (E) (solid content: 69.5% by mass) | 1.0 | 1.0 | 1.0 | 1.0 | 1.0 |
| | (G) | Titanium oxide | 5.0 | 5.0 | 5.0 | 5.0 | 5.0 |
| | (H) | Xylene | 4.0 | 4.0 | 4.0 | 4.0 | 4.0 |
| | (I) | Copper pyrithione | 5.0 | 5.0 | 5.0 | 5.0 | 5.0 |
| | Subtotal of base agent (X) | | 70.0 | 70.0 | 70.0 | 70.0 | 70.0 |

(continued)

| Component and ingredient of two-pack type coating composition (unit: parts by mass) | | | Example | | | | |
|---|---|---|---|---|---|---|---|
| | | | 9 | 10 | 11 | 12 | 13 |
| Curing agent (Y) | (D) | Ether-modified polydimethylsiloxane | 0.5 | 0.5 | 0.5 | 0.5 | 0.5 |
| | | Phenyl-modified polydimethylsiloxane | 7.0 | 7.0 | 7.0 | 7.0 | 7.0 |
| | (B) | Organosilane partially hydrolyzed condensate | 3.0 | 3.0 | 3.0 | 6.0 | 9.0 |
| | (C) | K-KAT XK-618 (Li, Zn) | 2.0 | 2.0 | 2.0 | 2.0 | 2.0 |
| | (H) | Xylene | 17.5 | 13.5 | 13.5 | 10.5 | 7.5 |
| | | 1-Butanol | | 4.0 | | 4.0 | 4.0 |
| | | Ethanol | | | 4.0 | | |
| | Subtotal of curing agent (Y) | | 30.0 | 30.0 | 30.0 | 30.0 | 30.0 |
| Total of base agent (X) and curing agent (Y) | | | 100 | 100 | 100 | 100 | 100 |
| Curing catalyst | | Amount of active ingredient in coating composition | 1.34 | 1.34 | 1.34 | 1.34 | 1.34 |
| | | Amount of Li in coating composition (mg/kg) | 466 | 466 | 466 | 466 | 466 |
| | | Amount of Zn in coating composition (mg/kg) | 50 | 50 | 50 | 50 | 50 |
| | | Amount of alkali metal relative to total amount of metal in catalyst (% by mass) | 90 | 90 | 90 | 90 | 90 |
| Evaluation of physical properties | | Curability at 23°C and 50% RH (hour) | 1 | 1.5 | 1 | 1.5 | 1 |
| | | Curability at 5°C and 30% RH (hour) | 3 | 5 | 4 | 4 | 3 |
| | | Antifouling performance | 5 | 5 | 4 | 5 | 5 |
| | | Pot life at 23°C and 50% RH (minute) | 30 | 90 | 90 | 75 | 60 |

The results of the Examples and Comparative Examples reveal that the antifouling coating composition according to the present invention does not use a tin-based catalyst or a bismuth-based catalyst, has rapid curability even in a low-temperature environment, and is also excellent in antifouling performance.

In addition, in the antifouling coating composition according to the present invention, in view of the fact that the alcohol-based organic solvent is contained in the organic solvent (H), it is possible to secure a sufficient time as the working life after preparing the coating composition.

INDUSTRIAL APPLICABILITY

In accordance with the present embodiments, it is possible to provide an antifouling coating composition which does not use a tin-based catalyst or a bismuth-based catalyst, has rapid curability even in a low-temperature environment, and is also excellent in antifouling performance; a kit for preparing the antifouling coating composition; an antifouling coating film formed of the antifouling coating composition and a method for producing the same; and a substrate with an antifouling coating film, in which the antifouling coating film is provided on a substrate, such as a ship, an underwater structure, and a fishery material, and a method for producing the same.

## Claims

1. An antifouling coating composition comprising (A) a curable organopolysiloxane having at least two silanol groups in one molecule, (B) at least one organosilicon crosslinking agent selected from an organosilane having at least two hydrolyzable groups in one molecule and a partially hydrolyzed condensate thereof, (C) a curing catalyst, and (H) an organic solvent, wherein the curing catalyst (C) contains an alkali metal compound containing at least one alkali metal, and the alkali metal compound is a carboxylic acid alkali metal salt containing a carboxylic acid having 6 to 24 carbon atoms.

**2.** The antifouling coating composition according to claim 1, wherein the curing catalyst (C) further contains a zinc compound.

**3.** The antifouling coating composition according to claim 1 or 2, wherein the alkali metal compound is a lithium compound.

**4.** The antifouling coating composition according to any one of claims 1 to 3, wherein the carboxylic acid contains two or more carboxylic acids.

**5.** The antifouling coating composition according to any one of claims 1 to 4, wherein the content of the alkali metal in the curing catalyst (C) is 50% by mass or more relative to the total amount of metals in the curing catalyst (C).

**6.** The antifouling coating composition according to any one of claims 1 to 5, wherein the content of the alkali metal in the antifouling coating composition is 100 mg/kg or more.

**7.** The antifouling coating composition according to any one of claims 1 to 6, which does not comprise a tin-based catalyst or a bismuth-based catalyst.

**8.** The antifouling coating composition according to any one of claims 1 to 7, wherein a weight average molecular weight of the curable organopolysiloxane (A) is 5,000 to 100,000.

**9.** The antifouling coating composition according to any one of claims 1 to 8, further comprising at least one selected from the group consisting of (D) a silicone oil and (E) an ether group-containing polymer.

**10.** The antifouling coating composition according to any one of claims 1 to 9, wherein the organic solvent (H) contains an alcohol-based organic solvent having 1 to 5 carbon atoms.

**11.** A kit for preparing the antifouling coating composition according to any one of claims 1 to 10, wherein
the kit is in a multi-pack type form individually having a base agent component containing the curable organopolysiloxane (A) and a curing agent component containing the organosilicon crosslinking agent (B) and the curing catalyst (C).

**12.** A kit for preparing the antifouling coating composition according to any one of claims 1 to 10, wherein

the kit is in a multi-pack type form individually having a base agent component containing the curable organopolysiloxane (A), a curing agent component containing the organosilicon crosslinking agent (B), and an additive component, and
the curing catalyst (C) is contained in at least one component selected from the group consisting of the curing agent component and the additive component.

**13.** An antifouling coating film formed of the antifouling coating composition according to any one of claims 1 to 10.

**14.** A substrate with an antifouling coating film, comprising the antifouling coating film according to claim 13 on a substrate.

**15.** The substrate with an antifouling coating film according to claim 14, wherein the substrate is a ship, an underwater structure, or a fishing gear.

**16.** A method for producing a substrate with an antifouling coating film, comprising the following step (1) and step (2), or comprising the following step (i) and step (ii):

Step (1): a step of applying or impregnating a substrate with the antifouling coating composition according to any one of claims 1 to 10, to obtain an applied material or an impregnated material; and
Step (2): a step of drying the applied material or the impregnated material obtained in the step (1), to cure the antifouling coating composition to form a coating film, or
Step (i): a step of curing the antifouling coating composition according to any one of claims 1 to 10, to form a coating film; and
Step (ii): a step of adhering the coating film obtained in the step (i) onto a substrate.

## Patentansprüche

1. Antifoulingbeschichtungszusammensetzung, umfassend (A) ein härtbares Organopolysiloxan mit mindestens zwei Silanolgruppen in einem Molekül, (B) mindestens ein Organosilicium-Vernetzungsmittel, ausgewählt aus einem Organosilan mit mindestens zwei hydrolysierbaren Gruppen in einem Molekül und einem partiell hydrolysiertem Kondensat davon, (C) einen Härtungskatalysator und (H) ein organisches Lösungsmittel, wobei der Härtungskatalysator (C) eine Alkalimetallverbindung enthält, die mindestens ein Alkalimetall enthält, und die Alkalimetallverbindung ein Carbonsäurealkalimetallsalz ist, das eine Carbonsäure mit 6 bis 24 Kohlenstoffatomen enthält.

2. Antifoulingbeschichtungszusammensetzung gemäß Anspruch 1, wobei der Härtungskatalysator (C) ferner eine Zinkverbindung enthält.

3. Antifoulingbeschichtungszusammensetzung gemäß Anspruch 1 oder 2, wobei die Alkalimetallverbindung eine Lithiumverbindung ist.

4. Antifoulingbeschichtungszusammensetzung gemäß einem der Ansprüche 1 bis 3, wobei die Carbonsäure zwei oder mehr Carbonsäuren enthält.

5. Antifoulingbeschichtungszusammensetzung gemäß einem der Ansprüche 1 bis 4, wobei der Gehalt des Alkalimetalls in dem Härtungskatalysator (C) 50 Masse-% oder mehr, relativ zur Gesamtmenge an Metallen in dem Härtungskatalysator (C), beträgt.

6. Antifoulingbeschichtungszusammensetzung gemäß einem der Ansprüche 1 bis 5, wobei der Gehalt des Alkalimetalls in der Antifoulingbeschichtungszusammensetzung 100 mg/kg oder mehr beträgt.

7. Antifoulingbeschichtungszusammensetzung gemäß einem der Ansprüche 1 bis 6, die keinen Katalysator auf Zinnbasis oder Katalysator auf Wismutbasis umfasst.

8. Antifoulingbeschichtungszusammensetzung gemäß einem der Ansprüche 1 bis 7, wobei das gewichtsgemittelte Molekulargewicht des härtbaren Organopolysiloxans (A) 5.000 bis 100.000 beträgt.

9. Antifoulingbeschichtungszusammensetzung gemäß einem der Ansprüche 1 bis 8, ferner umfassend mindestens eines, ausgewählt aus der Gruppe, bestehend aus (D) einem Silikonöl und (E) einem ethergruppenhaltigen Polymer.

10. Antifoulingbeschichtungszusammensetzung gemäß einem der Ansprüche 1 bis 9, wobei das organische Lösungsmittel (H) ein organisches Lösungsmittel auf Alkoholbasis mit 1 bis 5 Kohlenstoffatomen enthält.

11. Kit zur Herstellung der Antifoulingbeschichtungszusammensetzung gemäß einem der Ansprüche 1 bis 10, wobei das Kit in einer Mehrkomponentenform vorliegt, die einzeln eine Basismittelkomponente, die das härtbare Organopolysiloxan (A) enthält, und eine Härtungsmittelkomponente, die das Organosilicium-Vernetzungsmittel (B) und den Härtungskatalysator (C) enthält, aufweist.

12. Kit zur Herstellung der Antifoulingbeschichtungszusammensetzung gemäß einem der Ansprüche 1 bis 10, wobei

    das Kit in einer Mehrkomponentenform vorliegt, die einzeln eine Basismittelkomponente, die das härtbare Organopolysiloxan (A) enthält, eine Härtungsmittelkomponente, die das Organosilicium-Vernetzungsmittel (B) enthält, und eine Additivkomponente aufweist und
    der Härtungskatalysator (C) in mindestens einer Komponente, ausgewählt aus der Gruppe, bestehend aus der Härtungsmittelkomponente und der Additivkomponente, enthalten ist.

13. Antifoulingbeschichtungsfilm der aus der Antifoulingbeschichtungszusammensetzung gemäß einem der Ansprüche 1 bis 10 gebildet ist.

14. Substrat mit einem Antifoulingbeschichtungsfilm, umfassend den Antifoulingbeschichtungsfilm gemäß Anspruch 13 auf einem Substrat.

15. Substrat mit einem Antifoulingbeschichtungsfilm gemäß Anspruch 14, wobei das Substrat ein Schiff, eine Unterwasserstruktur oder eine Fischereiausrüstung ist.

**16.** Verfahren zur Herstellung eines Substrats mit einem Antifoulingbeschichtungsfilm, umfassend den folgenden Schritt (1) und Schritt (2) oder den folgenden Schritt (i) und Schritt (ii):

Schritt (1): ein Schritt zum Auftragen auf oder Imprägnieren eines Substrats mit einer Antifoulingbeschichtungszusammensetzung gemäß einem der Ansprüche 1 bis 10, um ein aufgetragenes Material oder ein imprägniertes Material zu erhalten, und
Schritt (2): ein Schritt zum Trocknen des in Schritt (1) erhaltenen aufgetragenen Materials oder imprägnierten Materials, um die Antifoulingbeschichtungszusammensetzung zu härten, so dass ein Antifoulingbeschichtungsfilm gebildet wird, oder
Schritt (i): ein Schritt zum Härten der Antifoulingbeschichtungszusammensetzung gemäß einem der Ansprüche 1 bis 10, um einen Beschichtungsfilm zu bilden, und
Schritt (ii): ein Schritt zum Anhaften des in Schritt (i) erhaltenen Beschichtungsfilms an ein Substrat.

## Revendications

**1.** Composition de revêtement antisalissure comprenant (A) un organopolysiloxane durcissable présentant au moins deux groupes silanol dans une molécule, (B) au moins un agent de réticulation à base d'organosilicium choisi parmi un organosilane présentant au moins deux groupes hydrolysables dans une molécule et un condensé partiellement hydrolysé de celui-ci, (C) un catalyseur de durcissement, et (H) un solvant organique, dans laquelle le catalyseur de durcissement (C) contient un composé de métal alcalin contenant au moins un métal alcalin, et le composé de métal alcalin est un sel de métal alcalin d'acide carboxylique contenant un acide carboxylique présentant 6 à 24 atomes de carbone.

**2.** Composition de revêtement antisalissure selon la revendication 1, dans laquelle le catalyseur de durcissement (C) contient en outre un composé de zinc.

**3.** Composition de revêtement antisalissure selon la revendication 1 ou la revendication 2, dans laquelle le composé de métal alcalin est un composé de lithium.

**4.** Composition de revêtement antisalissure selon l'une quelconque des revendications 1 à 3, dans laquelle l'acide carboxylique contient deux acides carboxyliques ou plus.

**5.** Composition de revêtement antisalissure selon l'une quelconque des revendications 1 à 4, dans laquelle la teneur du métal alcalin dans le catalyseur de durcissement (C) est de 50 % en masse ou plus par rapport à la quantité totale de métaux dans le catalyseur de durcissement (C).

**6.** Composition de revêtement antisalissure selon l'une quelconque des revendications 1 à 5, dans laquelle la teneur du métal alcalin dans la composition de revêtement antisalissure est de 100 mg/kg ou plus.

**7.** Composition de revêtement antisalissure selon l'une quelconque des revendications 1 à 6, qui ne comprend pas de catalyseur à base d'étain ou de catalyseur à base de bismuth.

**8.** Composition de revêtement antisalissure selon l'une quelconque des revendications 1 à 7, dans laquelle un poids moléculaire moyen en poids de l'organopolysiloxane durcissable (A) est de 5 000 à 100 000.

**9.** Composition de revêtement antisalissure selon l'une quelconque des revendications 1 à 8, comprenant en outre au moins un choisi dans le groupe consistant en (D) une huile de silicone et (E) un polymère contenant des groupes éther.

**10.** Composition de revêtement antisalissure selon l'une quelconque des revendications 1 à 9, dans laquelle le solvant organique (H) contient un solvant organique à base d'alcool présentant 1 à 5 atomes de carbone.

**11.** Kit pour préparer la composition de revêtement antisalissure selon l'une quelconque des revendications 1 à 10, dans lequel
le kit est dans une forme de type à emballages multiples présentant individuellement un composant d'agent de base contenant l'organopolysiloxane durcissable (A) et un composant d'agent de durcissement contenant l'agent de réticulation à base d'organosilicium (B) et le catalyseur de durcissement (C).

**12.** Kit pour préparer la composition de revêtement antisalissure selon l'une quelconque des revendications 1 à 10, dans lequel

le kit est dans une forme de type à emballages multiples présentant individuellement un composant d'agent de base contenant l'organopolysiloxane durcissable (A), un composant d'agent de durcissement contenant l'agent de réticulation à base d'organosilicium (B), et
un composant d'additif, et le catalyseur de durcissement (C) est contenu dans au moins un composant choisi dans le groupe consistant en le composant d'agent de durcissement et le composant d'additif.

**13.** Film de revêtement antisalissure constitué de la composition de revêtement antisalissure selon l'une quelconque des revendications 1 à 10.

**14.** Substrat comportant un film de revêtement antisalissure, comprenant le film de revêtement antisalissure selon la revendication 13 sur un substrat.

**15.** Substrat comportant un film de revêtement antisalissure selon la revendication 14, dans lequel le substrat est un navire, une structure sous-marine ou un engin de pêche.

**16.** Procédé de production d'un substrat comportant un film de revêtement antisalissure, comprenant l'étape (1) et l'étape (2) suivantes, ou comprenant l'étape (i) et l'étape (ii) suivantes :

Étape 1 : une étape d'application sur un substrat de la composition de revêtement antisalissure selon l'une quelconque des revendications 1 à 10 ou d'imprégnation de celui-ci avec celle-ci, pour obtenir un matériau ayant fait l'objet d'une application ou un matériau ayant fait l'objet d'une imprégnation ; et
Étape 2 : une étape de séchage du matériau ayant fait l'objet d'une application ou du matériau ayant fait l'objet d'une imprégnation obtenu dans l'étape (1), pour durcir la composition de revêtement antisalissure pour former un film de revêtement, ou
Étape (i) : une étape de durcissement de la composition de revêtement antisalissure selon l'une quelconque des revendications 1 à 10, pour former un film de revêtement ; et
Étape (ii) : une étape de collage du film de revêtement obtenu dans l'étape (i) sur un substrat.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014077205 A
- JP 2011032473 A
- JP 2011032474 A
- WO 2018123928 A1
- WO 2017209029 A1
- JP 2007238820 A
- CN 106752188 A
- JP 2001139816 A
- WO 2018123928 A
- JP 2004182908 A
- JP 2013129724 A